# EUROPEAN PATENT APPLICATION

(11) **EP 4 708 029 A1**
(43) Date of publication of application: **11.03.2026**
(21) Application number: 24813869.5
(22) Date of filing: 28.03.2024
(51) Int. Cl.: G06F 8/38

(54) **XR APPLICATION EDITING METHOD, DEVICE, AND STORAGE MEDIUM**

(30) Priority: 26.05.2023 CN 202310620776
(71) Applicant: TAOBAO (CHINA) SOFTWARE CO.,LTD., Hangzhou, Zhejiang 311121 (CN)
(72) Inventor: LYU, Chengfei, Hangzhou, Zhejiang 311121 (CN); WU, Fei, Hangzhou, Zhejiang 311121 (CN); WU, Ziqi, Hangzhou, Zhejiang 311121 (CN); XIU, Yutong, Hangzhou, Zhejiang 311121 (CN); CAI, Yu, Hangzhou, Zhejiang 311121 (CN); NIU, Chaoyue, Hangzhou, Zhejiang 311121 (CN)
(74) Representative: Wu, Ting
(86) International application number: PCT/CN2024/084512
(87) International publication number: WO 2024/244663

(57) **Abstract**

Embodiments of the present application provide an XR application editing method, an device, and a storage medium. In an embodiment of the present application, a runtime container is integrated in a content generator, and application content of an XR application is generated based on a runtime environment provided by the runtime container. When the application content is generated, the XR application is generated from the application content and the runtime container. The runtime container runs between the application content and an operating system to provide the runtime environment for the application content. Because the runtime container is added between the application content and the operating system, the running of the application content is no longer strongly dependent on the operating system, enabling the development and running of the XR application to be cross-platform and cross-device. This makes the development of the XR application simple and easy to implement, solving problems of XR application development and cross-device running.

## Description

### CROSS-REFERENCE TO RELATED APPLICATIONS

This application claims priority to Chinese Patent Application No. 202310620776.2, filed on May 26, 2023, and titled "XR Application Editing Method, Device, and Storage Medium," the entire content of which is incorporated herein by reference.

### TECHNICAL FIELD

The present application relates to the field of internet technologies, and in particular, to an XR application editing method, device, and storage medium.

### BACKGROUND

Extended Reality (XR) is a collective term for Augmented Reality (AR) and Virtual Reality (VR). VR refers to a technology that uses a computer to generate an environment that can directly impose visual, auditory, and tactile sensations on a participant, and allows the participant to interactively observe and manipulate a virtual world. AR is a technology that skillfully integrates virtual information with the real world, using various technical means such as multimedia, 3D modeling, intelligent interaction, and sensing to simulate and apply computer-generated virtual information such as text, images, 3D models, audio, and video to the real world, thereby achieving an "enhancement" of the real world.

With the popularization of XR technology, the supply of XR applications based on XR technology has become a problem that urgently needs to be solved. In the prior art, there are game development engines for three-dimensional (3D) game developers, and there are also two-dimensional (2D) application development engines for terminal development engineers. However, these development engines are not suitable for the development of XR applications. Therefore, there is an urgent need for a development solution capable of developing XR applications.

### SUMMARY

Multiple aspects of the present application provide an XR application editing method, device, and storage medium to solve the problem of XR application development.

An embodiment of the present application provides an XR application development system for terminal development, including: a runtime container required for generating an XR application, configured to provide a runtime environment during a generation process and a running process of the XR application;
a content generator, which internally integrates the runtime container and is configured to generate application content of the XR application based on the runtime environment provided by the runtime container;
an application generation platform, configured to generate the XR application according to the application content and the runtime container;
wherein, during the running process of the XR application, the runtime container runs between the application content and an operating system of a target device where the XR application is located, and the application content runs in the runtime environment provided by the runtime container.

An embodiment of the present application provides an XR application development method for terminal development, including: pre-developing a runtime container required for generating an XR application, the runtime container being configured to provide a runtime environment during a generation process and a running process of the XR application; in a content generator in which the runtime container is integrated, generating application content of the XR application based on the runtime environment provided by the runtime container; generating the XR application according to the application content and the runtime container; wherein, during the running process of the XR application, the runtime container runs between the application content and an operating system of a target device where the XR application is located, and the application content runs in the runtime environment provided by the runtime container.

An embodiment of the present application also provides a content generator, internally integrated with a runtime container required for generating an XR application, the runtime container being configured to provide a runtime environment during a generation process or a running process of the XR application, the content generator further including:
a 3D scene effect editing module, configured to, in response to an XR application generation operation, load 3D scene static resources, and based on the runtime environment provided by the runtime container, edit 3D scene dynamic information for the 3D scene static resources to obtain 3D scene resource data;
a 3D application logic editing module, configured to, based on the runtime environment provided by the runtime container, edit application logic code for the 3D scene resource data to obtain application content of the XR application;
wherein the application content and the runtime container form the XR application, and the runtime container in the XR application provides the runtime environment for the application content during the running process of the XR application.

An embodiment of the present application also provides an XR application editing method, applied to a content generator in which a runtime container is integrated, the runtime container being configured to provide a runtime environment during a generation process or a running process of an XR application, the method including: in response to an XR application generation operation, loading 3D scene static resources; based on the runtime environment provided by the runtime container, adding 3D scene dynamic information to the 3D scene static resources to obtain 3D scene resource data; based on the runtime environment provided by the runtime container, editing application logic code for the 3D scene resource data to obtain application content of the XR application; wherein the application content and the runtime container form the XR application, and the runtime container in the XR application provides the runtime environment for the application content during the running process of the XR application.

An embodiment of the present application also provides a runtime container, configured to provide a runtime environment during a generation process and a running process of an XR application, including: a framework layer, a runtime environment layer, and a software library layer;
the software library layer includes a plurality of software engines and provides second-type application programming interfaces (APIs) of the plurality of software engines, for encapsulating based on the second-type APIs to obtain first-type APIs;
the framework layer is configured to provide the first-type APIs to an application developer, for the application developer to write application logic code of the XR application based on the first-type APIs, and during the generation process or the running process of the XR application, sense a target event, run a function entity of at least one first-type API corresponding to the target event, and provide a target API encapsulated in the function entity to the runtime environment layer, the target API belonging to the second-type APIs;
the runtime environment layer is configured to, according to the target API, call a corresponding software engine in the software library layer to respond to the target event.

An embodiment of the present application also provides an XR application running method, including: in response to a trigger operation for running an XR application, starting a runtime container in the XR application to provide a runtime environment for application content in the XR application, the runtime container running between the application content and an operating system of a target device where the XR application is located; and running the application content based on the runtime environment provided by the runtime container to run the XR application.

An embodiment of the present application also provides an XR content running method, applied in a host application embedded with an XR runtime container, the method including: during a running process of the host application, displaying access entry information for XR content; in response to a trigger operation on the access entry information, starting the XR runtime container and obtaining the XR content; and running the XR content based on a runtime environment provided by the XR runtime container.

An embodiment of the present application provides an electronic device, including: a memory and a processor; the memory is configured to store a computer program, and the processor is coupled to the memory and configured to execute the computer program to implement the steps in the XR application editing method or the XR application running method or the XR application development method or the XR content running method provided by the embodiments of the present application.

An embodiment of the present application provides a computer-readable storage medium storing a computer program, wherein when the computer program is executed by a processor, it causes the processor to be able to implement the steps in the XR application editing method or the XR application running method or the XR application development method or the XR content running method provided by the embodiments of the present application.

In the embodiments of the present application, a runtime container is integrated into a content generator, and application content of an XR application is generated based on a runtime environment provided by the runtime container. After the application content is generated, the XR application, which includes the application content and the runtime container, is generated according to the application content and the runtime container. During the running process of the XR application developed based on the runtime container, the runtime container runs between the application content and an operating system, and the runtime container provides the runtime environment for the application content, enabling the application content to run in the runtime environment. Because the runtime container is added between the application content and the operating system, the running of the application content is no longer strongly dependent on the operating system, enabling the development and running of the XR application to be cross-platform and cross-device. This makes the development of XR applications simple and easy to implement, solving the problems of XR application development and cross-device running.

### BRIEF DESCRIPTION OF THE DRAWINGS

The accompanying drawings, which are described herein to provide a further understanding of the present application and constitute a part of the present application, are used to explain the present application along with the schematic embodiments and their descriptions, and do not constitute an improper limitation of the present application. In the drawings:
FIG. 1 is a schematic structural diagram of an XR application development system for terminal development provided by an embodiment of the present application;
FIG. 2 is an implementation architecture of a runtime container provided by an embodiment of the present application;
FIG. 3 is a schematic diagram of the relationship between the 3-layer architecture of the runtime container provided by an embodiment of the present application;
FIG. 4 is a schematic framework diagram of an XR application at runtime provided by an embodiment of the present application;
FIG. 5 is a schematic diagram of a 3D scene embedded in a host 2D application provided by an embodiment of the present application;
FIG. 6A is a schematic flowchart of the initialization of an XR application provided by an embodiment of the present application;
FIG. 6B is a schematic flowchart of a user-triggered function call provided by an embodiment of the present application;
FIG. 6C is a schematic flowchart of a user-triggered event callback provided by an embodiment of the present application;
FIG. 6D is a schematic structural diagram of a content generator provided by an embodiment of the present application;
FIG. 7A is a schematic flowchart of an XR application development method provided by an embodiment of the present application;
FIG. 7B is a schematic flowchart of an XR application editing method provided by an embodiment of the present application;
FIG. 8 is a schematic flowchart of an XR application running method provided by an embodiment of the present application;
FIG. 9 is a schematic structural diagram of an electronic device provided by an embodiment of the present application.

### DETAILED DESCRIPTION OF THE EMBODIMENTS

To make the objectives, technical solutions, and advantages of the present application clearer, the technical solutions of the present application will be described clearly and completely below in conjunction with the specific embodiments of the present application and the corresponding drawings. Obviously, the described embodiments are only a part of the embodiments of the present application, not all of the embodiments. Based on the embodiments in the present application, all other embodiments obtained by a person of ordinary skill in the art without creative labor shall fall within the protection scope of the present application.

It should be noted that the user information (including but not limited to user device information, user personal information, etc.) and data (including but not limited to data for analysis, stored data, displayed data, etc.) involved in the present application are all information and data that have been authorized by the user or fully authorized by all parties. The collection, use, and processing of related data need to comply with the relevant laws, regulations, and standards of the relevant countries and regions, and corresponding operation portals are provided for users to choose to authorize or refuse.

With the popularization of XR technology, the prior art faces the problem of XR application development. Especially before XR devices are widely popularized, the predominant form of XR applications involves 3D scenes embedded in 2D applications. This makes the development of XR applications for a long time mainly targeted at terminal development engineers. Terminal development engineers refer to engineers who develop 2D applications for mobile terminals such as mobile phones, including but not limited to: client-side engineers and front-end engineers.

To solve the problem of XR application development, some application developers, including terminal development engineers, have tried to use game engines to develop XR applications. A game engine is a framework for rapid game development. Common game engines include but are not limited to: Unity, UE, etc. Game engines are designed for game development, are powerful, and involve various functional modules such as rendering, physics, and animation. Complete and complex XR applications can be developed based on game engines. However, developing XR applications based on game engines also has the following shortcomings:

First: Terminal development engineers face huge challenges in transitioning to game development. These challenges include at least the following points:
(1) Game engines have high requirements for terminal development engineers, requiring them to have a deep understanding of 3D graphics knowledge, which presents a relatively high entry barrier.
(2) It is necessary to be familiar with the game engine. Game engines such as UE/Unity involve hundreds of header files and thousands of Application Programming Interfaces (APIs), making them very difficult to master.
(3) The Integrated Development Environments (IDEs) of game engines, such as UE Blueprints, Unity Editor, and other toolchains, are independently designed and differ greatly from the IDEs for application development, making it difficult for terminal development engineers to adapt in a short time.

Second: Game engines are not designed for embedding in APPs, which makes it difficult to support the development of application forms such as 3D scenes embedded in 2D applications. The following problems may exist:
(1) Multiple instances: The biggest feature of 2D applications is the switching between different pages. The pages are isolated from each other, support state cache recovery, and support going back, so each page is an independent instance. However, game engines operate in an exclusive mode, lacking lifecycle management. Resources are difficult to recycle after page switching, causing resource waste, and memory resources can easily reach the upper limit available to the APP, triggering application crash problems.
(2) User Interface (UI) interaction: The UI of 2D applications uses responsive rendering, while the UI of game engines uses immediate-mode rendering. The implementation mechanisms of the two are different, which makes it difficult for applications developed with game engines to achieve good UI layout and fluency, and it is also difficult to implement complex UI effects.
(3) Interaction with 2D application Software Development Kits (SDKs): Due to the complexity of their architecture, game engines cannot integrate 2D application SDKs during the development of 3D scenes. Therefore, data communication between 3D scenes developed based on game engines and 2D applications can only be done through events, which makes the code implementation troublesome.

In view of the above, an embodiment of the present application provides an XR application development system for terminal development. The development system includes a runtime container that can provide a runtime environment during the XR application generation process (the XR application generation process can also be called the XR application development process) and running process, a content generator responsible for content generation, and an application generation platform responsible for packaging the application. In the content generator, the runtime container is integrated, and the application content of the XR application is generated based on the runtime environment provided by the runtime container. After the application content is generated, the application generation platform generates an XR application containing the application content and the runtime container according to the application content and the runtime container. During the running process of the XR application developed based on the runtime container, the runtime container runs between the application content and the operating system, and the runtime container provides the runtime environment for the application content, so that the application content can run in the runtime environment. Because the runtime container is added between the application content and the operating system, the underlying information of the device can be shielded, so that the running of the application content is no longer strongly dependent on the operating system, enabling the development and running of the XR application to be cross-platform and cross-device, which in turn makes the development of XR applications simple and easy to implement, solving the problems of XR application development and cross-device running.

Further, developing XR applications based on a runtime container enables the development and running of XR applications to be cross-platform and cross-device. This allows terminal development engineers to develop not only standalone XR applications for XR devices, but also XR applications that mainly embed 3D scenes in 2D applications. This can meet the demand of XR devices for standalone XR applications, as well as the demand of terminal devices for XR applications that mainly embed 3D scenes in 2D applications, solving the challenges of cross-device (such as mobile phones, AR devices, VR devices) issues in the XR field and adapting to the development of XR technology.

Further, in the XR application development system for terminal development provided by the embodiments of the present application, a runtime container that can provide a runtime environment is pre-developed, and a content generator and an application generation platform are provided. For developers, they only need to develop application content based on the runtime container, and then use the application generation platform to package the application content and the runtime container into an XR application. This has advantages such as a low barrier to entry, parallel research and development, and complete R&D support, and has low requirements for developers. It is suitable for both terminal development engineers and other developers such as game engineers. In addition, due to the existence of the runtime container, the development of XR applications becomes more streamlined. Various application requirements can be directly considered without being restricted by the various limitations of game engines. The various defects and problems mentioned above that are faced when developing XR applications based on game engines can be overcome, thereby developing XR applications with features such as cross-device and cross-platform capabilities.

Further, since the runtime environment is provided by the runtime container, the development of application content is relatively independent. The application content mainly includes 3D scene resource data and application logic code. In a specific implementation, the application code is written in a dynamic language such as JS. In this way, the developed XR application also has characteristics such as rapid iteration and high performance.

In the various embodiments of the present application, the implementation form of the XR device is not limited; it can be an AR device or a VR device. AR devices include but are not limited to: AR glasses, AR helmets, etc.; VR devices include but are not limited to: VR glasses, VR helmets, etc. Correspondingly, the terminal device running the 2D application with an embedded 3D scene can be, but is not limited to: a mobile phone, a tablet computer, a laptop computer, a smart wristband, etc.

The following embodiments of the present application will describe in detail the XR application development system for terminal development provided by the embodiments of the present application in conjunction with the accompanying drawings.

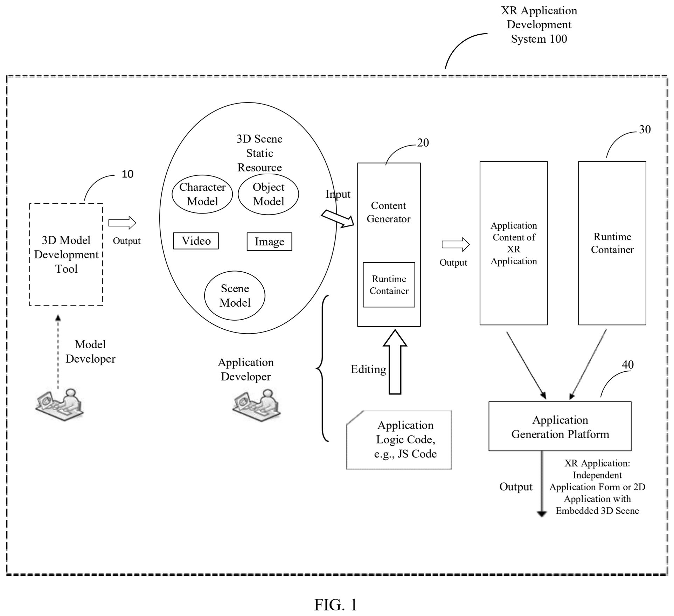

FIG. 1 is a schematic structural diagram of an XR application development system 100 for terminal development provided by an embodiment of the present application. As shown in FIG. 1, the system 100 includes: a content generator 20, a runtime container 30, and an application generation platform 40.

As shown in FIG. 1, the XR application development system 100 of this embodiment includes a runtime container 30. The runtime container 30 is a pre-developed software stack that runs on top of an operating system. It does not belong to the operating system. The software stack is provided for XR application development and is necessary for developing XR applications. Its function is to provide a runtime environment during the XR application development process and running process. The runtime environment refers to the environment required for the developed XR application or the intermediate-state program code during the XR application development process to run, for example, including some software engines and environment variables required for the XR application or intermediate-state program code to run, as well as the running logic required to run the XR application or intermediate-state program code. In this embodiment, a software engine is a broad concept, a generalization of various engines, library functions, and the like.

On the basis that the XR application development system 100 includes the runtime container 30, the XR application development process of this embodiment includes: a process of developing the application content required for the XR application based on the runtime environment provided by the runtime container 30, and a process of generating the XR application based on the runtime container and the application content. Among them, the content generator 20 is responsible for generating the application content of the XR application based on the runtime environment provided by the runtime container 30. To facilitate the content generator 20's ability to use the runtime environment provided by the runtime container 30, the runtime container 30 is integrated into the content generator 20. In this embodiment, developing the application content based on the runtime environment provided by the runtime container 30 enables the application content to have the ability to run in the runtime environment provided by the runtime container 30, and can ensure that the effect of the application content during development is consistent with the effect of the application content during runtime.

After the application content is generated, the application generation platform 40 is responsible for generating the XR application according to the runtime container 30 and the application content. In this embodiment, the XR application is different from a traditional application program in that it includes both the application content and the runtime container 30, which is responsible for providing the runtime environment for the application content. Since the application content is developed based on the runtime environment provided by the runtime container 30, the application content has the ability to run in the runtime environment provided by the runtime container 30. Based on this, the runtime container 30 and the application content are integrated together to form the XR application. In this way, during the running process of the XR application, the runtime container 30 can run between the application content and the operating system of the target device where the XR application is located, and is responsible for providing the runtime environment for the application content, so that the application content runs in the runtime environment provided by the runtime container, ultimately achieving the goal of the XR application running normally. Here, the target device where the XR application is located can be an XR device or a terminal device running a host 2D application, which is not limited herein.

In this embodiment, the runtime container 30 runs on top of the operating system of the target device where the XR application is located, and provides the runtime environment for the application content of the XR application with the help of the operating system. Specifically, it uses various software and hardware resources of the target device with the help of the operating system of the target device, such as CPU, GPU, memory, network card, bandwidth, and other resources. Based on these software and hardware resources, it provides the runtime environment required for the application content of the XR application to run, so that the application content runs in the runtime environment, thereby presenting a 3D scene and interaction and/or control based on the 3D scene to the user.

In this embodiment, the implementation form of the XR application can be a standalone application form, or it can be an application form mainly including 3D scenes embedded in a 2D application. Depending on the implementation form of the XR application, the way the application generation platform 40 generates the XR application will be different. The role of the application generation platform 40 is to package the runtime container 30 into a corresponding installation package for release according to the implementation form of the XR application, so that the target device can install the runtime container 30 locally according to the corresponding installation package.

If the XR application is in a standalone application form, the application generation platform 40 can integrate the runtime container 30 and the application content into an installation package of the XR application and release the installation package of the XR application. This allows the XR application to be downloaded, installed, and run like other standalone applications. Specifically, the XR application can be an AR application running on an AR device, or a VR application running on a VR device, which is not limited herein.

If the XR application is in an application form mainly including 3D scenes embedded in a 2D application, the 2D application that needs to have the 3D scenes embedded is called a host 2D application. The application generation platform 40 can integrate the runtime container 30 into an installation package of the host 2D application and release the installation package of the host 2D application. In this way, when the host 2D application is downloaded, installed, and run like other standalone applications, the runtime container 30 will also be downloaded, installed, and run together. Here, the application content of the XR application can be released separately from the host 2D application, or it can be embedded in the installation package of the host 2D application and released together with the installation package, which is not limited herein. Optionally, considering that the data volume of the application content of the XR application is large, the application content of the XR application can be separately released to a resource server corresponding to the host 2D application. In this way, during the running process of the host 2D application, when it is necessary to run the 3D scenes provided by the XR application, the application content of the XR application can be downloaded from the resource server on demand, and the application content can be run in the runtime environment provided by the runtime container 30, thereby presenting the 3D scenes in a page of the host 2D application, where the 3D scenes are embedded in a certain page of the host 2D application.

It is noted here that the embodiments of the present application do not limit the host 2D application, which can be any 2D application with a need for 3D scene display, such as an e-commerce application, an entertainment application, an educational application, or a medical application.

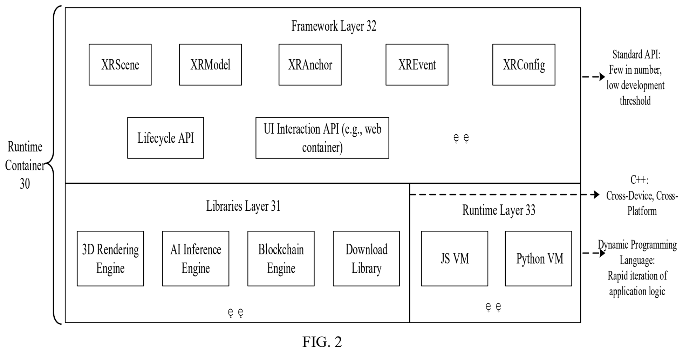

The runtime container 30 of this embodiment is a provider of a runtime environment that runs on top of the operating system. Whether during the XR application development process or the XR application running process, the way the runtime container 30 provides the runtime environment is the same or similar. As shown in FIG. 2, which is an implementation architecture of the runtime container 30 provided by this embodiment, it includes: a software library (libraries) layer 31, a framework layer 32, and a runtime environment (runtime) layer 33. The three layers are introduced and explained separately below:
Libraries Layer 31: Contains a series of basic libraries required by an XR application. These basic libraries provide various software engines and/or library functions, including but not limited to: a 3D rendering engine, an AI inference engine, an engine or library function for implementing download functions provided by a download library, an engine or library function for implementing storage functions provided by a storage library, an engine or library function for implementing network functions provided by a network library, an engine or library function for implementing configuration functions provided by a configuration library, a blockchain engine, an engine or library function for implementing analytics functions provided by an analytics library, a 2D UI engine, and an event engine, etc. Further, according to the different download content, the download library can be divided into an image library, a video library, etc. These software engines are responsible for providing some basic capabilities required for the XR application to run, such as 3D scene rendering capability, neural network model inference capability, various resource download capabilities, storage capabilities, network communication capabilities, configuration capabilities, etc. The following descriptions of various engines and software libraries are only for exemplary illustration and are not limited to these:
3D rendering engine: Responsible for providing capabilities such as 3D rendering, animation, and physics simulation, for example, AceNNR can be used, but is not limited to it.

AI inference engine: Responsible for providing on-device inference and running capabilities for deep neural network models, for example, it can be Mobile Neural Network (MNN).

Blockchain engine: Responsible for providing blockchain services.

Network library: Provides efficient network transmission capabilities between the device side (mainly refers to the target device where the XR application is located) and the cloud side (mainly refers to the cloud server corresponding to the XR application).

Download library: Based on the network library, combined with the download library encapsulated on the cloud side, it provides capabilities for downloading various resources from the cloud side and resource caching;
Image library: Based on the network library, combined with the image download library encapsulated on the cloud side, it supports the download of images in multiple compressed formats and provides a local image caching mechanism;
Video library: Based on the network library, combined with the video download library encapsulated on the cloud side server, it supports the download of videos in multiple formats and provides a local video caching mechanism.
Analytics library: Responsible for providing log analytics services, and responsible for compressing and uploading log data generated during the running of the XR application on the device side to the cloud side;
Storage library: Provides file storage services. If the storage library is a relational database, it provides relational storage services. If the database is a time-series database, it provides time-series storage services, etc.

Configuration library: Responsible for providing various configuration functions for 3D models, coordinates, events, etc. in the XR application.

In this embodiment, the basic capabilities provided by the various software engines mentioned above can be encapsulated into APIs, and these basic capabilities are exposed externally through these APIs. These APIs are called basic APIs. Relative to the first-type APIs, these basic APIs can also be called second-type APIs. The first-type APIs are a class of APIs exposed to application developers for them to write application logic code. The second-type APIs do not need to be exposed to application developers. The first-type APIs are encapsulated based on the second-type APIs. The function entity corresponding to each first-type API can contain one or more second-type APIs, which is not limited herein. Application developers develop application logic code based on the first-type APIs. During the running process of the XR application, when this application logic code is run, it first triggers the call of a first-type API, which in turn triggers the call of a second-type API encapsulated in the first-type API, which in turn triggers the call of the corresponding software engine, thereby using the basic capabilities provided by the software engine to achieve the presentation of 3D scenes, etc.

Framework Layer 32: Provides relevant capabilities required for XR application research and development, mainly exposing first-type APIs to application developers. The specific implementation of the first-type APIs is mostly provided by the software engines in the libraries layer. Depending on the application scenario, the number and types of first-type APIs provided by the framework layer will also be different. The following are some examples of first-type APIs, including but not limited to the following types:
(1) 3D scene APIs: This type of API is used for 3D scene development, and this type of API is mainly implemented by encapsulating the 3D rendering capabilities of the 3D rendering engine in the libraries layer, so that application developers do not have to interact directly with the 3D rendering engine, which can, to a certain extent, lower the barrier for application developers to understand and develop XR applications.
   The 3D scene APIs include multiple APIs. The following are some examples of 3D scene APIs:
   XRScene: Represents a 3D scene. A 3D scene can be implemented through this API;
   XRModel: Represents a 3D model. A 3D model in a 3D scene can be implemented through this API;
   XRAnchor: Represents a reference coordinate in a 3D world. Position calibration in a 3D scene can be implemented through this API;
   XREvent: Represents system and application-related events. Various events in a 3D scene can be responded to through this API;
   XRConfig: Represents the configuration of an XR application. Various configurations can be made for the XR application through this API, such as configuring different resource loading and running strategies for the XR application for high-end, mid-range, and low-end devices, and also configuring the resolution, level, type, etc. of each 3D model or other object in the 3D scene.
(2) Lifecycle management API: Responsible for managing the lifecycle of an XR application, including but not limited to the startup, exit, update, etc. of the XR application. This type of API is mainly implemented by encapsulating the lifecycle management capabilities of a lifecycle management engine in the libraries layer.
(3) Resource management API: Responsible for managing various resources of an XR application, including but not limited to the download, caching, storage, etc. of resources required by the XR application. This type of API is mainly implemented by encapsulating the download and storage capabilities provided by a download engine and a storage engine in the libraries layer.
(4) UI Interaction API: This type of API is applied in application scenarios where a 3D scene is embedded within a 2D application. It is responsible for managing UI interactions between the XR application and its host 2D application, and supports displaying pages developed using W3C standards. The UI Interaction API can be implemented as a web container, which is a concrete container responsible for providing the GUI of the 2D application and handling its display within the XR application. Alternatively, it can be implemented as a native container, which is a virtualized container. This type of API is primarily implemented by encapsulating the UI interaction capabilities provided by a 2D UI engine in the libraries layer.
(5) Event Interaction API: Manages event interactions within the XR application, including but not limited to events such as clicks, long presses, zooms, rotations, and proximity detection. This API is primarily implemented by encapsulating the event management and response capabilities of the event engine in the libraries layer.

In addition to exposing first-type APIs to application developers, the framework layer 32 performs several logical functions. For example, during the generation or execution of an XR application, the framework layer 32 detects a target event, which is an event involving a call to at least one first-type API. Based on the operational logic governing the first-type APIs, it executes a function entity of the corresponding first-type API. This process provides a target API, which is encapsulated within the function entity, to the runtime environment layer 33. In this context, the target API is a second-type API. Since different first-type APIs generally implement different functions, the second-type APIs encapsulated within their respective function entities may also differ, and this disclosure is not limited in this regard.

Runtime Environment Layer 33: This layer provides a runtime virtual machine (VM) that is compatible with the programming language of the XR application. The runtime VM, in turn, provides the runtime environment for the XR application. Specifically, it responds to a target event from the framework layer 32 by using the provided target API to invoke a corresponding software engine in the libraries layer. This allows for the execution of intermediate-state resource data during development or the running of application content within the final XR application.

In some embodiments, the VM adapted to the programming language used by the XR application may be a JS VM or a Python VM. If the application logic code of the XR application is written in the JS language, a JS VM is provided; if the application logic code of the XR application is written in the Python language, a Python VM is provided. It should be noted here that these runtime VMs provide a runtime environment for the XR application. On the one hand, this includes using the software and hardware resources of a target device by means of the operating system of the target device to provide the software and hardware resources required by the XR application. On the other hand, this includes, based on these software and hardware resources, calling basic capabilities provided by corresponding software engines in the libraries layer to perform rendering and other processing on the 3D scene resource data and to interpret and execute the application logic code, and enabling the XR application to use various basic capabilities in the libraries layer, and ultimately presenting the 3D scene and interaction and/or control based on the 3D scene to a user.

JS VM: Primarily supports developers (e.g., terminal R&D engineers) in writing JS application logic. This code can be dynamically delivered, then interpreted and executed by the JS VM, enabling dynamic updates to the XR application's logic. Examples of such logic include the UI and interaction logic for a 3D scene.

Python VM: Primarily supports developers (e.g., terminal R&D engineers) in writing Python application logic. This code can be dynamically delivered, then interpreted and executed by the Python VM, enabling dynamic updates for components like specific algorithm tasks. For instance, in an AR scene, a developer could use Python to write the application logic for a face recognition task.

It should be noted that, in embodiments of the present application, the number of runtime VMs in the runtime environment layer 33 is not limited and can be one or more. For example, the layer may include a standalone JS VM, a standalone Python VM, or both a JS VM and a Python VM simultaneously. When multiple runtime VMs are present, they are typically implemented in different dynamic programming languages to provide runtime environments for XR applications written in those respective languages.

Further, when a plurality of runtime VMs are present, the runtime environment layer 33 further includes a VM scheduler module. During operation of an XR application, the VM scheduler module is configured to schedule, from the plurality of runtime VMs, a target VM implemented with the same dynamic programming language as the XR application, thereby providing a runtime environment for the XR application. Correspondingly, during development of an XR application, the VM scheduler module is configured to schedule, from the plurality of runtime VMs, a target VM implemented with the same dynamic programming language used for development, thereby providing a runtime environment for the intermediate-state resource data.

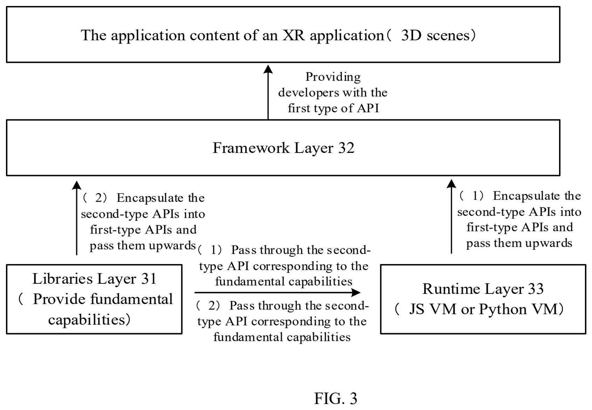

In this embodiment, there is an association relationship between the three-layer architecture of the runtime container 30. As shown in FIG. 3, the libraries layer 31 is at the bottom layer, and the runtime environment layer 33 is between the libraries layer 31 and the framework layer 32. The libraries layer 31 is responsible for providing various basic capabilities. Different software engines provide different basic capabilities; for example, a 3D rendering engine provides 3D rendering capabilities, and an AI inference engine provides AI model inference capabilities based on deep neural networks. These basic capabilities are encapsulated to form different second-type APIs for capability exposure. On the one hand, the second-type APIs are exposed to the runtime environment layer 33. On the other hand, the second-type APIs are further encapsulated into first-type APIs and are passed through to application developers via the framework layer 32. For the framework layer 32, during the development or running process of an XR application, it can detect a target event that triggers a call to a first-type API. For example, it can be an event that triggers the running of the XR application during the running process of the XR application. During the development process of the XR application, it can be an event of loading static 3D scene resources, or a trigger event for viewing the 3D scene effect after adding dynamic 3D scene information, or a trigger event for viewing the interaction effect after adding application code, etc. These target events will trigger at least one first-type API to be called and execute a function entity of the at least one first-type API. When a second-type API included in the function entity is executed, the second-type API is provided to the runtime environment layer 33. For the runtime environment layer 33, during the development or running process of an XR application, it can receive the second-type API provided by the framework layer 32, and call the basic capabilities provided by the software engines in the libraries layer 31 through the second-type API. For the event of loading static 3D scene resources, the trigger event for viewing the 3D scene effect after adding dynamic 3D scene information, and the trigger event for viewing the interaction effect after adding application code, please refer to the descriptions below.

In this embodiment, the various basic capabilities in the libraries layer can be implemented using C++. As C++ is a cross-platform language, using it to implement these capabilities enables XR applications developed within the runtime environment provided by this runtime container to have cross-platform and cross-device characteristics.

In this embodiment, when the various fundamental capabilities in the libraries layer are implemented using C++, several ways to provide access to these capabilities include, but are not limited to:
The first type: a native integration approach. This requires the XR application's logic code to be developed in C++. This approach lacks the capability for rapid iteration.

The second type: a non-native implementation approach. The application logic code in the XR application can be written using JS or Python, leveraging their capabilities to enable dynamic updating and iteration of the application logic.

When the non-native exposure method is adopted, as shown in FIG. 3, the following two methods can be used to make APIs accessible:
(1) In the libraries layer, a second-type API is exposed to a JS VM or a Python VM in the runtime environment layer through JS bindings or Python bindings. The JS VM or Python VM then encapsulates the second-type API into a first-type API and exposes the first-type API to the framework layer.
(2) In the libraries layer, second-type APIs are made available to the JS VM or the Python VM in the runtime environment layer 33 through JS binding or Python binding technology, and are then encapsulated into first-type APIs, which are provided directly to the framework layer.

In an embodiment of the present application, the application content of an XR application includes 3D scene resource data and application logic code. Specifically, the 3D scene resource data is resource data responsible for presenting a 3D scene, including, for example, static 3D scene resources and dynamic 3D scene information. The static 3D scene resources are static resources in a 3D scene, such as various 3D models and images, and the like. The dynamic 3D scene information is dynamic information related to 3D scene effects, such as the movement trajectory of a 3D model, a camera system in the 3D scene, and a water body system in the 3D scene. This dynamic information enriches and diversifies the 3D scene effects. The application logic code includes various code reflecting application logic. This application logic includes logic for controlling and interacting with various resources in the 3D scene from the application level, such as movement control of a character model, interaction control with a character model or an object model, and the appearance of special effects when specific conditions are met.

In an optional embodiment, 3D scene static resources are generated in advance. Based on these resources, dynamic 3D scene information and application logic code are added, thereby obtaining the application content of the XR application. One way for the content generator 20 to generate the application content includes: in response to an XR application generation operation, loading the 3D scene static resources and, based on the runtime environment provided by the runtime container 30, adding dynamic 3D scene information and application logic code to the resources.

In some embodiments, application logic code may be written by an application developer based on first-type APIs provided by the framework layer in runtime container 30.

In an optional embodiment, as shown in FIG. 1, the XR application development system 100 provided in this embodiment further includes a 3D model development tool 10 configured to enable model developers to develop static 3D scene resources for generating XR applications. Specifically, in response to a 3D model development operation by a model developer, the tool 10 can generate various 3D models and output them as at least a portion of the static 3D scene resources.

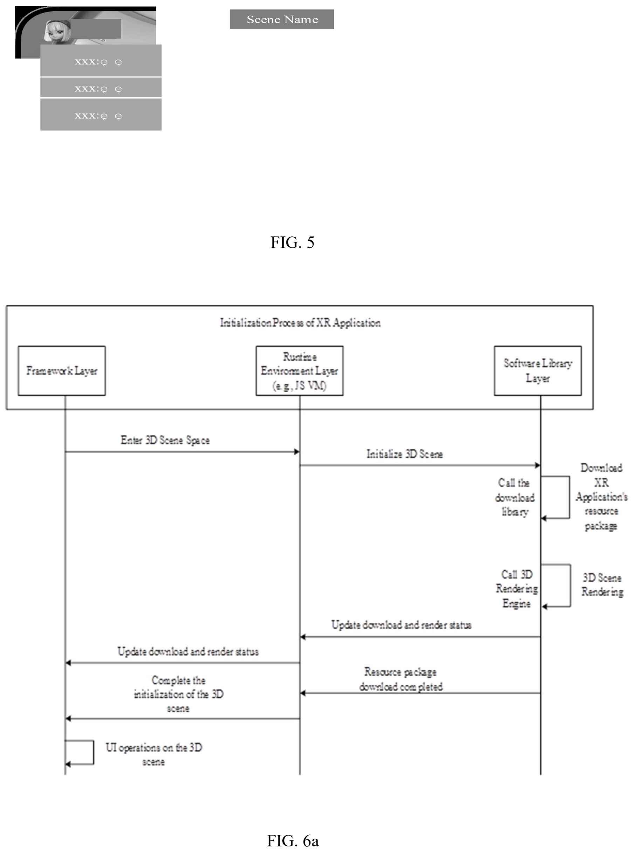

In some embodiments, the 3D scene static resources include various static resources for building 3D scenes in the XR application, including:
(1) 3D model files configured to describe 3D models. Specifically, 3D models can be classified according to application requirements, with varying classifications possible in different application scenarios. Taking the XR scene shown in FIG. 5 as an example, 3D models can be divided into, but are not limited to, characters, objects, and scenes. For example, the characters, shoes, bags, and the entire scene shown in FIG. 5 are all 3D models. In embodiments of the present application, the format of the 3D models is not limited and may include, but is not limited to, FBX, OBJ, and GItF.
(2) Image assets, which are presented at certain locations in the 3D scene.
(3) Video resources, comprising video data to be presented at certain locations in the 3D scene.
(4) Audio resources configured to be played at certain locations in the 3D scene.

It should be noted here that the aforementioned 3D model files are mandatory resources, while the image, video, and audio resources are optional and may be selected based on the application scenario.

In this embodiment, the implementation of the 3D model development tool 10 is not limited. Any development tool that provides code editing, compilation, and debugging for 3D models, along with a GUI, is applicable to the embodiments of the present application. For example, a plug-in may be developed using Android Studio or Xcode. Alternatively, a self-developed IDE for XR application development may be used. This self-developed IDE requires the following functionality: 3D model code editing, compilation, and debugging, as well as a GUI.

After obtaining the static 3D scene resources required for developing the XR application, the content generator 20 can add dynamic 3D scene information and application logic code to these resources, ultimately producing the XR application resources. These resources can also be called a resource package of the XR application.

In this embodiment, as shown in FIG. 1, the content generator 20 receives static 3D scene resources as input. Utilizing the runtime environment provided by the runtime container 30, the content generator 20 integrates dynamic 3D scene information with the static 3D scene resources to generate 3D scene resource data. Further, as shown in FIG. 1, the content generator 20 also receives application logic code as input. Utilizing the same runtime environment, the content generator 20 incorporates this application logic code into the generated 3D scene resource data to produce the application content of the XR application.

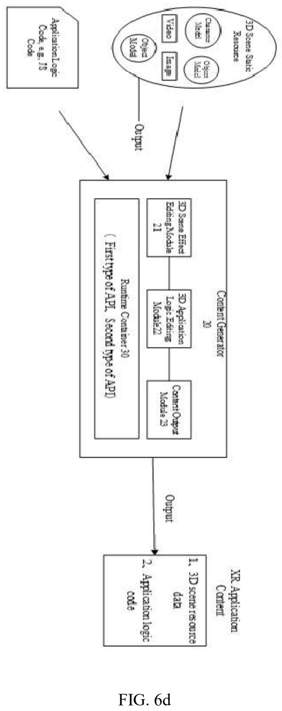

In an embodiment of the present application, the internal implementation architecture of the content generator 20 is not limited. As shown in FIG. 6d, one implementation structure of the content generator 20 includes a 3D scene effect editing module 21, a 3D application logic editing module 22, a content output module 23, and a runtime container 30. The 3D scene effect editing module 21 and the 3D application logic editing module 22 reside above runtime container 30 and require it to provide a runtime environment.

The 3D scene effect editing module 21 is for, in response to an XR application generation operation, loading static scene resources and editing dynamic scene information for the static resources to obtain scene resource data, based on the runtime environment provided by the runtime container 30.

The 3D application logic editing module 22 communicates with the 3D scene effect editing module 21 and loads 3D scene resource data. Based on the runtime environment provided by the runtime container 30, the module 22 edits application logic code for the 3D scene resource data to obtain the application content of the XR application.

The content output module 23 communicates with the 3D application logic editing module 22 and is configured to output the XR application content to the application generation platform 40, which generates the XR application based on this content and the runtime container 30. The XR application content includes 3D scene resource data and application logic code. Specifically, the 3D scene resource data includes, but is not limited to, the 3D scene organization description file, mesh data, material data, texture map data, and video data. Specifically, the 3D scene organization description file includes, but is not limited to, 3D scene organization, light settings, rendering settings, camera movement, and physical collision. The material data includes, but is not limited to, glass material and metal material. The application logic code may be written in, but is not limited to, JS and can be represented as xxx.js.

During the application content generation process, the runtime container 30 provides a runtime environment for intermediate-state data generated during the XR application generation process, enabling the data to exhibit its runtime behavior. Based on this behavior, the system determines whether to adjust the 3D scene dynamic information or the application logic code to obtain application content that meets requirements.

The 3D scene effect editing module 21 is configured to: load static 3D scene resources and run them in the runtime environment provided by the runtime container 30, thereby obtaining a static 3D image; edit dynamic 3D scene information for the static 3D scene resources based on editing operations performed on the static 3D image, thereby obtaining first intermediate-state resource data; call the runtime container 30 again to run the first intermediate-state resource data in its runtime environment in response to a scene effect viewing operation, thereby obtaining a first intermediate-state 3D scene; and if the first intermediate-state 3D scene does not achieve the desired scene effect, adjust the dynamic 3D scene information until the desired effect is achieved, thereby obtaining 3D scene resource data.

Optionally, the 3D scene effect editing module 21 is configured to, in response to a project creation operation, create a project and name the project, for example, the 3D scene can be used as the project name, such as AAA; in response to an import operation for static 3D scene resources, import the static 3D scene resources, where these static resources include but are not limited to: various 3D models, etc.; start the runtime container 30, run the static 3D scene resources in the runtime environment provided by the runtime container 30, and display a static 3D image on an interaction interface, where the static 3D image contains these 3D models. In this embodiment, the content generator provides an interaction interface, which is a 3D interface with three coordinate axes: x, y, and z. Preferably, the 3D scene itself is a 3D model. When displaying the 3D scene, the center of the 3D scene can be at the origin of the xz plane of the editing interface, and the ground plane y value is 0. Further, on this basis, the 3D scene effect editing module 21 edits dynamic information for these 3D models, ultimately obtaining target 3D scene resource data that meets requirements.

In this embodiment, the content generator 20's UI interaction can also display the intermediate-state 3D scene. Further, in response to an editing operation on the static 3D image, dynamic 3D scene information is edited for the 3D scene static resources. This includes displaying editing controls on the static 3D image. When a user triggers an editing control, a dynamic information editing interface appears displaying various editable information items. When a user configures these items, their configured information is acquired as the dynamic 3D scene information. This dynamic information is then superimposed with the static resources to form the 3D scene resource data.

Depending on the XR application scenario, the interface form of the above-mentioned dynamic information editing interface and the displayed information items may vary, without limitation thereto. The information items may include, for example: an information item used to configure a trigger action, where configurable trigger methods include, but are not limited to, a swipe trigger, a long press trigger, a drag trigger, and a multiple-click trigger; an information item used to configure the display effect of a 3D model, where configurable display methods include, but are not limited to, animation, sound effects, joining a session, etc.; and an information item used to configure the end state of a 3D model, where configurable end states include, but are not limited to, hiding on end, closing on end, and loop playback. Additionally, based on the application scenario, dynamic information related to the 3D scene static resources, such as camera control, light control, water body control, scene placeholders, and a pathfinding system, can also be edited.

The process of editing the several types of 3D scene dynamic information listed above for static 3D scene resources is exemplarily described below:
(1) Camera control: In response to a camera control editing operation for a 3D model, camera control information is edited for the 3D model, thereby providing rich camera control capabilities for the 3D model within the 3D scene. Specifically, this camera control information includes, but is not limited to, control information for controlling the 3D model's switching between different view angles; control information for controlling the 3D model's movement on a preset camera track; and control information for controlling the 3D model to follow the movement of another 3D model or scene object. Thus, when the 3D scene is presented and this camera control information is executed by the 3D rendering engine, the 3D model can switch between view angles, move on the preset track, or follow another 3D model or scene object, and so forth.
(2) Light control: The 3D rendering engine provided by the runtime container 30 supports two types of light: real-time light and baked light. Real-time light supports directional light. Baked light supports directional light, point light, spot light, and area light. In response to a light control editing operation for a 3D model, relevant light control information is edited for the 3D model, for example, selecting a light source type for the 3D model, and editing parameters such as the color, illumination angle, illumination range, and illumination intensity of the light source, so as to render a light effect that meets requirements for the 3D model in the 3D scene.
(3) Water body control: The 3D rendering engine provided by the runtime container 30 supports a water body material. Based on using the water body material on a planar mesh, a water surface rendering effect can be quickly achieved. The water body material can be used by selecting Shader Graphs or Water Shader under the material option. In this embodiment, the parameters involved in the water body material include but are not limited to: Deep Color: deep water color; Shallow Color: shallow water color; Strength: currently no effect; Smoothness: smoothness; Displacement: wave movement range; Normal Strength: wave normal strength; Normal Tiling: wave normal map tiling coefficient. In response to a water body control editing operation for a 3D model, relevant water body control information is edited for the 3D model, for example, selecting a water shader for the 3D model, and editing parameters such as water color, smoothness, wave movement range, and wave normal strength, so as to render a water surface rendering effect that meets requirements for the 3D model in the 3D scene.
(4) Scene placeholder editing: Placeholder information needs to be added within the 3D scene, for example, placeholder information for placing 3D models, placeholder information for placing cameras, and placeholder information for placing images, videos, or other objects for use by the application layer. The specific locations in the 3D scene where placeholder information is to be set vary according to the Product Requirements Document (PRD) of the application. For example: 1) Image placeholders are used to mark locations in the 3D scene where images need to be placed; 2) Video placeholders are used to mark locations in the 3D scene where videos need to be placed; 3) Red envelope placeholders are used to mark locations in the 3D scene where red envelopes need to be displayed; 4) Camera placeholders, where multiple camera placeholders can be defined in the 3D scene, so that camera view angle switching can be performed on these camera placeholders at runtime; 5) 3D model placeholders, used to mark the positions of corresponding 3D models in the 3D scene, which can realize operations such as model movement, rotation, and scaling, and can also support subsequent updates of 3D models; 6) Clickable area placeholders, where 3D models in the 3D scene can be marked with clickable areas outside the 3D models, as well as locations for collision detection in the 3D scene, by adding a Clickable component. In response to a placeholder editing operation for the 3D scene, edit relevant placeholder information for the 3D scene, for example, set placeholder information such as 3D model placeholders, image placeholders, video placeholders, red envelope placeholders, camera placeholders, and clickable area placeholders in the 3D scene, so as to display objects such as 3D models, images, videos, and red envelopes at reasonable positions in the 3D scene and perform rendering effects such as camera view angle switching for the 3D models at the camera placeholders.
(5) Pathfinding system editing: According to the 3D scene's map, three different types of areas are set: 1) Walkable: indicates that the current area allows a specific model object (e.g., a character model) to walk on it, such as the ground surface; 2) Not Walkable: indicates an obstacle (such as a wall), meaning it cannot pass through; 3) Jump: indicates that the current area allows it to jump over it, such as a threshold or chasm, among others. In response to a pathfinding editing operation for the 3D scene, the relevant pathfinding information is edited for the 3D scene. For example, within the 3D scene, regions may be defined that allow specific model objects to pass through, regions that do not allow passage, or regions that can be skipped, in order to facilitate the rendering of pathfinding effects for specific model objects within the 3D scene.

It should be noted that, while editing the 3D scene static resources, the 3D scene effect editing module 21 in the content generator 20 can start the runtime container 30. The first intermediate-state resource data, generated by adding the dynamic information, is then run in the runtime environment of runtime container 30. For example, the 3D rendering engine provided by the runtime container 30 can be called to render the first intermediate-state resource data and obtain a first intermediate-state 3D scene. Based on the rendering effect of this 3D scene, the dynamic information is iteratively corrected until a satisfactory rendering effect is obtained. This dynamic information is then used as the final dynamic information, which, combined with the 3D scene static resources, forms the 3D scene resource data in the application content.

In an optional embodiment, the dynamic information editing interface can be independent of the interface presenting the static 3D image, or it can be embedded in that interface. This is not limited. Regardless of the interface form, a refresh control or an effect viewing control can be provided on the dynamic information editing interface or the interface presenting the static 3D image. By clicking or long-pressing these controls, an application developer can initiate an operation to view the 3D scene effect after adding dynamic 3D scene information. In response to this viewing operation, the 3D scene effect editing module 21 calls the runtime container 30 again and runs the first intermediate-state resource data in the runtime environment provided by the container to obtain a first intermediate-state 3D image. This image shows the 3D scene effect resulting from adding the dynamic 3D scene information to the 3D scene static resources.

In this embodiment, whether the first intermediate-state 3D image satisfies the scene effect may be manually determined by the application developer, and in a case that it is determined that the first intermediate-state 3D image does not satisfy the scene effect, the 3D scene dynamic information is adjusted, the first intermediate-state resource data is regenerated, and the regenerated first intermediate-state resource data is run in the runtime environment provided by the runtime container 30 until a first intermediate-state 3D image satisfying the scene effect is obtained. The 3D scene dynamic information at this time and the 3D scene static resource form 3D scene resource data. Alternatively, a functional module or component that performs scene effect recognition and judgment on various 3D images can also be generated, and the functional module or component automatically captures the image state of the first intermediate-state 3D image, and determines, according to the image state, whether the first intermediate-state 3D image meets the scene effect.

The 3D application logic editing module 22 is specifically configured to: in response to a loading operation of 3D scene resource data, start the runtime container 30, and run the 3D scene resource data in a runtime environment provided by the runtime container 30 to obtain a first intermediate-state 3D image; in response to an editing operation of application logic code, generate second intermediate-state resource data according to the 3D scene resource data and the application logic code, and re-invoke the runtime container 30 to run the second intermediate-state resource data in the runtime environment provided by the runtime container 30 to obtain a second intermediate-state 3D image; and when the second intermediate-state 3D image does not satisfy an interactive effect, adjust the application logic code until the interactive effect is satisfied, so as to obtain application content of an XR application.

In an embodiment of the present application, the running effect of the second intermediate-state resource data, that is, the running effect of the application logic code in the 3D scene, is divided into two categories: one is scene control, and the other is scene interaction.

Scene control: controlling a 3D model in the 3D scene according to user input. This means that the application logic code has the function of responding to user input and controlling the 3D model in the 3D scene according to the user input. Here, the manner of controlling the 3D model in the 3D scene is not limited; for example, the 3D model can be controlled to move, jump, etc., or the 3D model can be controlled to switch a camera view angle, etc. For example, in the scene shown in FIG. 5, a character model can be controlled to move according to a user's operation of a joystick (which is an example of user input), and new position coordinates of the character model, for example, world coordinates [0.15, 0.22, 0.31], are calculated according to the user input, and the character model is moved from the original position coordinates to the new position coordinates. It should be noted here that the method of user input will vary depending on the target device displaying the 3D scene. If the target device is a mobile terminal such as a mobile phone, the user can input through gestures, voice, or touch control; if the target device is a VR device or an AR device, the user can input through buttons on a controller or through pose. Taking touch control input as an example, it can be a user's click, long press, or double-click operation on a 3D scene interface, or it can be a user's trigger operation on certain controls in the 3D scene.

Scene interaction: mainly refers to triggering various response events or interactive information according to user input or a 3D model controlled by the user. This means that the application logic code has the function of responding to user input or monitoring the state of the 3D model controlled by the user, and triggering response events or interactive information according to the user input or the state of the 3D model. For example: 1) The user clicks a 3D model to control the 3D model to be displayed or hidden, or to display relevant special effects; 2) When the user controls a certain 3D model to approach a certain area or object, red envelope information or other interactive information is displayed in the 3D scene.

Based on the above, when the second intermediate-state 3D image does not satisfy the interactive effect, examples of adjusting the application logic code include but are not limited to: when the position of a 3D model is not ideal, modifying the position for interacting with the 3D model, the type of trigger operation for the 3D model, etc., in the application logic code; when the red envelope information displayed in the 3D scene does not meet application requirements, modifying the red envelope information in the application logic code to card-flipping information, etc., until the application logic code that meets the interactive effect is obtained. At this time, the application logic code and the 3D scene resource data form the application content of the XR application.

In an embodiment of the present application, the content generator 20 provides an interactive interface, on which the aforementioned first intermediate-state 3D image and second intermediate-state 3D image can be displayed. Similarly, for the manner of identifying whether the second intermediate-state 3D image satisfies the interactive effect, reference can be made to the aforementioned manner of identifying whether the first intermediate-state 3D image satisfies the scene effect, which will not be repeated here.

In an embodiment of the present application, the application logic code is pre-written by an application developer. In addition to providing the runtime environment, the runtime container of this embodiment can also provide APIs required for developing an XR application to the application developer. For ease of description and distinction, these APIs for the application developer are referred to as first-type APIs. The application developer can write the application logic code required by the XR application based on the first-type APIs. The first-type APIs are obtained by encapsulating second-type APIs. The second-type APIs are the APIs externally provided by the software engines provided by the runtime container 30. The software engine provided by the runtime container can be called through the second-type APIs, and then these software engines provide the runtime environment required by the intermediate-state resource data or the XR application. Since the first-type APIs are obtained by encapsulating the second-type APIs, their quantity is far less than the quantity of the second-type APIs, and the first-type APIs are more concrete and easier to understand, allowing the application developer to write the application logic code more simply and efficiently, thereby reducing the development difficulty of the XR application.

It should be noted here that the manner of running the aforementioned 3D scene static resources, 3D scene resource data, first intermediate-state resource data, and second intermediate-state resource data in the runtime environment provided by the runtime container 30 will vary depending on the implementation architecture of the runtime container 30. This will be described in detail below with reference to the implementation architecture of the runtime container 30 shown in FIG. 2.

### During the process of editing 3D scene dynamic information:

The 3D scene effect editing module 21, in response to a loading operation of 3D scene static resources, starts the runtime container 30. After the runtime container 30 is started, the framework layer senses a loading event of the 3D scene static resources. The loading event is a specific example of the aforementioned target event. At least one first-type API corresponding to the event is determined, including but not limited to: a 3D scene API, a lifecycle management API, and a resource management API, etc. Then, according to the logical relationship between these APIs, function entities of these APIs are executed. Second-type APIs are encapsulated in the function entities of these APIs. For example, a second-type API corresponding to a 3D rendering engine is encapsulated in the function entity of the 3D scene API, a second-type API corresponding to a lifecycle management engine is encapsulated in the function entity of the lifecycle management API, and a second-type API corresponding to a resource management engine is encapsulated in the function entity of the resource management API. The second-type APIs encapsulated in these function entities are referred to as target APIs. When any target API is executed, the framework layer provides the target API to the runtime environment layer, and the runtime environment layer calls a corresponding software engine according to the target API to respond to the event of loading the 3D scene static resources. For example, the runtime environment layer calls the 3D rendering engine to render the 3D scene static resources to obtain a 3D static image, and calls the lifecycle management engine to manage the lifecycle of the 3D static image, such as display and closing; and calls the resource management engine to perform resource management on the 3D scene static resources, such as local storage, caching, etc.

The 3D scene effect editing module 21, in response to a scene effect viewing trigger operation, re-invokes the runtime container 30. After the runtime container 30 is re-invoked, the framework layer senses an event of viewing the 3D scene effect after adding the 3D scene dynamic information. The event is a specific example of the aforementioned target event. At least one first-type API corresponding to the event is determined, including but not limited to: a 3D scene API, a lifecycle management API, and a resource management API, etc. Then, according to the logical relationship between these APIs, function entities of these APIs are executed. Second-type APIs are encapsulated in the function entities of these APIs. For example, a second-type API corresponding to a 3D rendering engine is encapsulated in the function entity of the 3D scene API, a second-type API corresponding to a lifecycle management engine is encapsulated in the function entity of the lifecycle management API, and a second-type API corresponding to a resource management engine is encapsulated in the function entity of the resource management API. The second-type APIs encapsulated in these function entities are referred to as target APIs. When any target API is executed, the framework layer provides the target API to the runtime environment layer, and the runtime environment layer calls a corresponding software engine according to the target API to respond to the event of loading the 3D scene static resources. For example, the runtime environment layer calls the 3D rendering engine to render the first intermediate-state resource data to obtain a first intermediate-state 3D image, and calls the lifecycle management engine to manage the lifecycle of the first intermediate-state 3D image, such as display and closing; and calls the resource management engine to perform resource management on the first intermediate-state resource data, such as local storage, caching, etc.

### During the process of editing application logic code:

The 3D application logic editing module 22, in response to a loading operation of 3D scene resource data, starts the runtime container 30. After the runtime container 30 is started, the framework layer senses a loading event of the 3D scene resource data. The loading event is a specific example of the aforementioned target event. At least one first-type API corresponding to the event is determined, including but not limited to: a 3D scene API, a lifecycle management API, a resource management API, a UI interaction API, and an event interaction API, etc. Then, according to the logical relationship between these APIs, function entities of these APIs are executed. Second-type APIs are encapsulated in the function entities of these APIs. For example, a second-type API corresponding to a 3D rendering engine is encapsulated in the function entity of the 3D scene API, a second-type API corresponding to a lifecycle management engine is encapsulated in the function entity of the lifecycle management API, a second-type API corresponding to a resource management engine is encapsulated in the function entity of the resource management API, a second-type API corresponding to a 2D UI engine is encapsulated in the function entity of the UI interaction API, and a second-type API corresponding to an event management engine is encapsulated in the function entity of the event interaction API. The second-type APIs encapsulated in these function entities are referred to as target APIs. When any target API is executed, the framework layer provides the target API to the runtime environment layer, and the runtime environment layer calls a corresponding software engine according to the target API to respond to the loading event of the 3D scene static resources. For example, the runtime environment layer calls the 3D rendering engine to render the 3D scene resource data to obtain a first intermediate-state 3D image, and calls the lifecycle management engine to manage the lifecycle of the first intermediate-state 3D image, such as display and closing; and calls the resource management engine to perform resource management on the 3D scene resource data, such as local storage, caching, etc. Further, an event engine responds to interactive events during the running process of the 3D scene resource data, for example, responding to interactive events such as long press, click, and rotation on an interface. When the XR application is implemented in the form of a 3D scene embedded in a host 2D application, the application logic code may include a function of UI interaction with the host 2D application, in which case the 2D UI engine can respond to and process the UI interaction between the application logic code and the host 2D application.

The 3D application logic editing module, in response to an editing operation of the application logic code, re-invokes the runtime container 30. After the runtime container 30 is re-invoked, the framework layer senses an editing event of the application logic code. The editing event is a specific example of the aforementioned target event. At least one first-type API corresponding to the event is determined, including but not limited to: a 3D scene API, a lifecycle management API, a resource management API, a UI interaction API, and an event interaction API, etc. Then, according to the logical relationship between these APIs, function entities of these APIs are executed, and second-type APIs are encapsulated in these function entities. The second-type APIs encapsulated in these function entities are referred to as target APIs. When any target API is executed, the framework layer provides the target API to the runtime environment layer, and the runtime environment layer calls a corresponding software engine according to the target API to respond to the event of loading the 3D scene static resources. For a detailed description, refer to the above embodiments, which will not be repeated here.

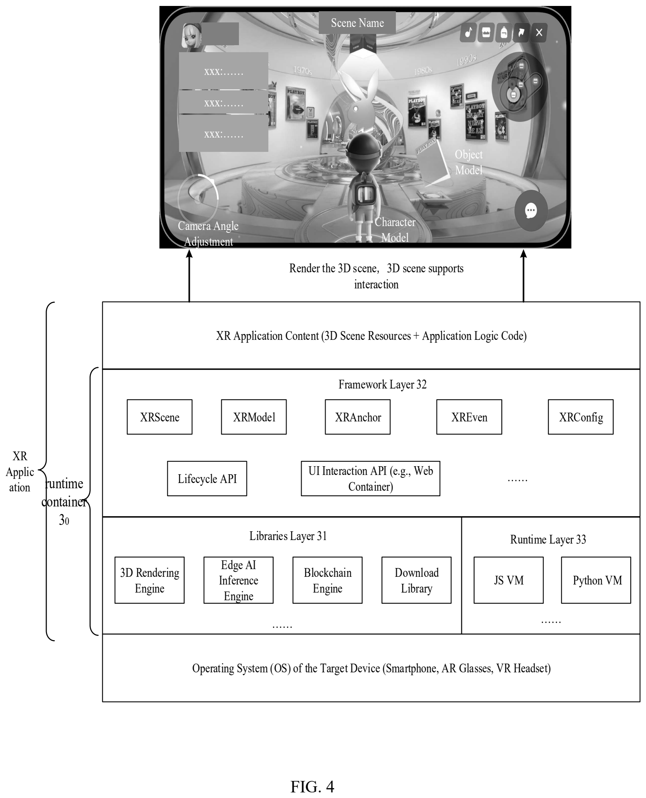

Based on the above operations, the application content of the XR application can be generated. Subsequently, the application generation platform 40 packages the application content with the runtime container to generate the XR application. Depending on the application form of the XR application, different methods can be used to deploy it to a target device. After the XR application is deployed to the target device, the XR application can be run on the target device. Regardless of the method, the running process of the XR application refers to starting the runtime container 30 in the XR application, the runtime container 30 running between the application content of the XR application and the operating system of the target device where the XR application is located, the runtime container 30 providing a runtime environment for the application content of the XR application, and the application content being run in the runtime environment, thereby presenting a 3D scene and interaction or control in the 3D scene to the user. The framework for running the XR application is shown in FIG. 4. The top layer is the application content of the XR application, the middle is the runtime container 30, and the bottom layer is the operating system of the target device hosting the XR application. The runtime container 30 runs on top of the operating system of the target device and provides a runtime environment for the application content of the XR application. The application content of the XR application runs in this runtime environment, displaying a 3D scene to the user and performing interaction and/or control based on the 3D scene. The interaction here includes interaction triggered by the user, as well as interaction and/or control automatically triggered within the 3D scene according to application requirements.

In the above framework, the framework layer 32 of the runtime container 30 senses a target event during the running of the XR application, executes a function entity of at least one first-type API corresponding to the target event, and provides a target API encapsulated in the function entity to the runtime environment layer 33. The target API refers to a second-type API encapsulated in the function entity. The runtime environment layer 33 is configured to, according to the target API provided by the framework layer 32, call a corresponding software engine in the software library layer 31 to respond to the target event. Specifically, the runtime environment layer 33 can, according to the target API, call the corresponding software engine in the software library layer 31 to respond to the target event, and pass the response result to an application interface of the XR application through the framework layer 32.

During the running of the XR application, target events that can be sensed by the framework layer 32 include but are not limited to: a trigger event for running the XR application, an interaction event with a target object in the XR application, a trigger event for closing the XR application, etc. The target object in the XR application includes but is not limited to: at least one of a 3D model, a 2D object, and an interactive area in a 3D scene. As shown in FIG. 5, the 3D model can be a character model, an item model, or an entire 3D scene model; correspondingly, the 2D object includes but is not limited to: images, audio, or videos that need to be displayed in the 3D scene.

In an optional embodiment, the XR application is implemented as a standalone application. In this case, a user can click, double-click, or long-press an icon of the XR application to initiate a trigger operation to run the XR application; the framework layer 32 can respond to the trigger operation of the icon of the XR application to generate a trigger event for running the XR application.

In another optional embodiment, the XR application is implemented as an application form with a 3D scene embedded in a host 2D application. In this application form, an access entry to the 3D scene will be provided in the host 2D application. In this case, a user can click, double-click, or long-press the access entry to initiate a trigger operation to run the XR application; the framework layer 32 can respond to the trigger operation of the access entry of the XR application to generate a trigger event for running the XR application.

Depending on the application scenario to which the XR application belongs, the first-type APIs corresponding to the trigger event for running the XR application will be different, which is not limited in the embodiments of the present application. For example: the first-type APIs corresponding to the trigger event for running the XR application include: a 3D scene API, a lifecycle management API, and a resource management API. Second-type APIs of corresponding software engines are encapsulated in the function entities of these APIs. For example, a second-type API corresponding to a 3D rendering engine is encapsulated in the function entity of the 3D scene API, a second-type API corresponding to a lifecycle management engine is encapsulated in the function entity of the lifecycle management API, and a second-type API corresponding to a resource management engine is encapsulated in the function entity of the resource management API. The framework layer 32 sequentially runs the function entities of the first-type APIs according to application logic, and when it runs to the second-type APIs encapsulated in these function entities, it takes the second-type APIs as target APIs and provides them to the runtime environment layer 33. The runtime environment layer 33 then calls a corresponding software engine according to the target API to respond to the trigger event for running the XR application. For example, the runtime environment layer 33 calls the 3D rendering engine to call a lifecycle management engine to download a resource package of the XR application, calls the 3D rendering engine to render the downloaded resources, and feeds back the download and resource loading status to the framework layer 32 through the runtime environment layer to complete the 3D scene initialization of the XR application. During this process, a resource management engine can also be called to manage the resource package of the XR application, for example, for local storage, caching, etc.

Depending on the application scenario to which the XR application belongs, the first-type APIs corresponding to the interaction event with the target object in the XR application will be different, which is not limited in the embodiments of the present application. For example: the at least one first-type API corresponding to the interaction event includes but is not limited to: a 3D scene API, a UI interaction API, and an event interaction API, etc. Second-type APIs are encapsulated in the function entities of these APIs. For example, a second-type API corresponding to a 3D rendering engine is encapsulated in the function entity of the 3D scene API, a second-type API corresponding to a 2D UI engine is encapsulated in the function entity of the UI interaction API, and a second-type API corresponding to an event management engine is encapsulated in the function entity of the event interaction API. The framework layer 32 sequentially runs the function entities of the first-type APIs according to application logic, and when it runs to the second-type APIs encapsulated in these function entities, it takes the second-type APIs as target APIs and provides them to the runtime environment layer 33. The runtime environment layer 33 then calls a corresponding software engine according to the target API to respond to the interaction event. For example, the runtime environment layer calls the 3D rendering engine to render resource data involved in the interaction event, calls an event engine to respond to the interaction event, such as responding to interactive events like long press, click, and rotation on an interface, and when the interaction event includes UI interaction with a host 2D application, it can also call a 2D UI engine to respond to the UI interaction with the host 2D application.

For the runtime environment layer 33, the manner of calling the corresponding software engine in the software library layer 31 to respond to the target event will vary depending on the target API. This is illustrated below with examples combining some of the software engines included in the software library layer 31:
When the target API includes a second-type API corresponding to a download engine in the software library layer 31, the download engine is called to download the application content of the XR application from a server;
When the target API includes a second-type API corresponding to a storage engine in the software library layer 31, the storage engine is called to perform storage management on the application content of the XR application;
When the target API includes a second-type API corresponding to a lifecycle management engine in the software library layer 31, the lifecycle management engine is called to perform lifecycle management on the XR application;
When the target API includes a second-type API corresponding to a 3D rendering engine in the software library layer 31, the 3D rendering engine is called to perform 3D rendering for the XR application;
When the target API includes a second-type API corresponding to an AI inference engine in the software library layer 31, the AI inference engine is called to perform AI inference processing for the XR application;
When the target API includes a second-type API corresponding to a 2D UI engine in the software library layer 31, the 2D UI engine is called to process UI interaction between the XR application and a host 2D application;
When the target API includes a second-type API corresponding to an event engine in the software library layer 31, the event engine is called to process event callback logic in the XR application.

In the following embodiment, taking the XR application in the form of a 3D scene embedded in a host 2D application as an example, assume that the host 2D application is an e-commerce APP. To increase the fun and user experience of the e-commerce APP, a 3D scene can be embedded in the e-commerce APP, for example, an AR clothes try-on scene, a VR shopping scene, etc., can be embedded in the e-commerce APP. Taking this scene as an example, the running process of the runtime container provided in the embodiments of the present application is described.

An access entry for the XR application is set on a certain page of the e-commerce APP. After a user clicks the access entry, the user enters a 3D scene space presented by the XR application, as shown in FIG. 5. In this embodiment, the application content (or called a resource package) of the XR application includes 3D scene resource data and application logic code written in JS, which is developed based on the above development system. During the running of the e-commerce APP, when the user triggers access to the 3D scene space of the XR application, the 3-layer architecture in the runtime container can be called, and this 3-layer architecture supports the display and interaction of the 3D scene space, including but not limited to the following aspects:
1. Management of the XR application lifecycle

The runtime container, in response to a trigger operation of the XR application, calls an API corresponding to a download library in the second-type APIs to download a resource package of the XR application, completes the resource loading of the XR application, and calls an API corresponding to a 3D rendering engine in the second-type APIs to use the 3D rendering engine to perform 3D scene rendering for the XR application, so as to display the 3D scene space on a relevant page of the e-commerce APP, and responds to an exit or close operation of the XR application, performing actions such as cleaning up related resources (e.g., memory, CPU) when the XR application exits, so as to realize the management of the XR application lifecycle.

Further, the management process of the XR application lifecycle is described in conjunction with the 3-layer architecture of the runtime container. As shown in FIG. 6A, the process of initializing the XR application includes: the framework layer, in response to a trigger operation of entering the 3D scene space, enters the 3D scene, triggering a runtime VM to initialize the 3D scene; the runtime VM calls a download library in the software library layer to download the resource package of the XR application; the runtime VM calls a 3D rendering engine to render the 3D scene according to the downloaded resources, and updates the resource download and rendering status, providing the resource download and rendering status to the framework layer; after the resource package of the XR application is downloaded, the download library notifies the runtime VM that the resource package download is complete; the runtime VM notifies the framework layer that the initialization of the 3D scene is complete; thereafter, the framework layer completes UI operations on the 3D scene, etc. It should be noted here that the resource package of the XR application can be encrypted and compressed, so before rendering, the runtime VM can also call a corresponding engine to decrypt and decompress the resource package.

2. The user triggers a first-type operation in the 3D scene space. The first-type operation refers to an operation that will trigger a function call. The called function is responsible for responding to the first-type operation and making a response to the first-type operation.

Taking the 3D scene space shown in FIG. 5 as an example, the first-type operations triggered by the user include but are not limited to the following:
The user operates a joystick in the 3D scene to move a character model. This operation triggers a series of behaviors, such as changes in position and scene during a roaming state, which can be responded to and processed by a callback function;
The user operates a camera view angle. This operation will trigger scene changes, and these changes can be responded to and processed by a callback function;
The user clicks the screen to trigger a playback function. This operation will trigger playing music or special effects, as well as map switching, etc., and these changes can be responded to and processed by a callback function.

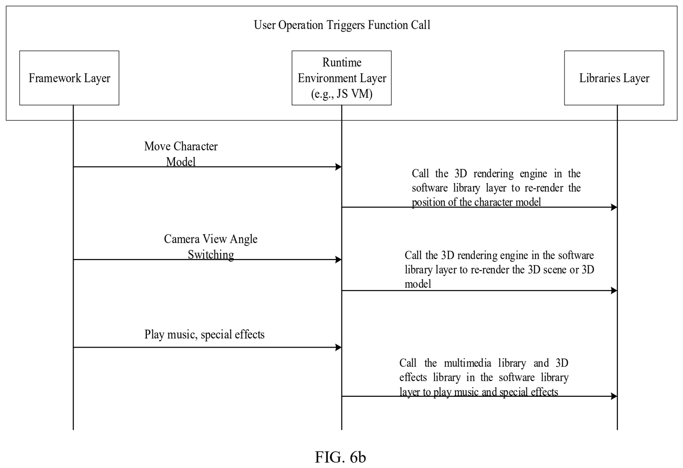

Further, the processing process of a user triggering a function call is described in conjunction with the 3-layer architecture of the runtime container. As shown in FIG. 6B, the processing process of a user triggering a first-type operation includes:
Case 1: The framework layer, in response to a user's operation of moving the character model, notifies the runtime VM of the user's operation of moving the character model, and the runtime VM calls a 3D rendering engine in the software library layer to re-render the position of the character model;
Case 2: The framework layer, in response to a user's operation of switching the camera view angle, notifies the runtime VM of the user's operation of switching the camera view angle, and the runtime VM calls a 3D rendering engine in the software library layer to re-render the 3D scene or 3D model to obtain the 3D scene or 3D model from a new view angle;
Case 3: The framework layer, in response to a user's operation of playing music or special effects, notifies the runtime VM of the user's operation of playing music or special effects, and the runtime VM calls a multimedia library and a 3D effects library in the software library layer to play the music and special effects.

3. The user triggers a second-type operation in the 3D scene space. The second-type operation refers to an operation that will trigger an event callback. The calledback event is responsible for responding to the second-type operation and making a response to the second-type operation.

Taking FIG. 5 as an example, cases where a user initiates a second-type operation to trigger an event callback include but are not limited to: the user operates a character model to move, a 3D rendering engine performs collision detection, and upon discovering that the character model is approaching or leaving a specified model object, triggers an event callback to an upper-layer application logic code layer for a response, such as popping up a red envelope, a coupon, or a venue message.

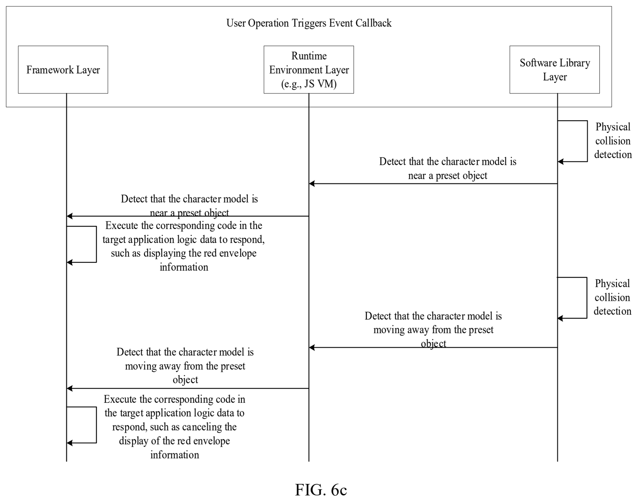

Further, the processing process of a user triggering an event callback is described in conjunction with the 3-layer architecture of the runtime container. As shown in FIG. 6C, the processing process of a user triggering a second-type operation includes:
Case 1: The VM calls a 3D rendering engine in the software library layer to monitor whether a 3D model (taking a character model as an example) collides with a set object, referred to as physical collision detection; upon detecting that the character model is approaching a preset object, it provides feedback to the framework layer through the runtime VM; the framework layer executes corresponding code data in target application logic code data to respond, for example, displaying red envelope information.
Case 2: The VM calls a 3D rendering engine in the software library layer to monitor whether a 3D model (taking a character model as an example) collides with a set object, referred to as physical collision detection; upon detecting that the character model is leaving a preset object, it provides feedback to the framework layer through the runtime VM; the framework layer calls corresponding code data in target application logic code data to respond, for example, canceling the display of red envelope information.

The XR application development system provided by the embodiments of the present application has the following beneficial effects:
(1) Cross-device and high performance: By implementing the basic capabilities in the software library layer with C++, and performing targeted optimization to obtain better performance, such as parallel computing acceleration for the instruction set of a device, cross-device capability is achieved at the code execution level. Further, when encapsulating these basic capabilities to obtain APIs, secondary encapsulation can be performed for the APIs of different devices, so that the XR application can also be cross-device at the interaction level, thereby improving the performance of the XR application.
(2) Fast iteration: Dynamic programming languages such as Python or JS are selected to implement the application logic code and the runtime VM of the XR application. The runtime VM is used as a glue layer to call the basic capabilities in the software library layer implemented through C++. The iteration frequency of the basic capabilities in the software library layer is low and can be iterated through version updates. However, the update frequency of the application logic of the XR application is high. Using a dynamic programming language for implementation, with the advantages of the dynamic programming language, is conducive to the rapid release and update of application logic, while ensuring high performance globally.
(3) Lightweight: According to the development needs of the XR application, the software engines or software libraries in the software library layer are made lightweight, for example, by discarding some unnecessary software libraries, and introducing some software libraries by means of grafting rather than direct porting. In addition, the software engines or software libraries in the software library layer are released by dynamic delivery, instead of being released together with the installation package of the XR application or the installation package of the host 2D application, further achieving lightweightness. Furthermore, when an AI inference engine is included, an MNN engine is used, and image processing, matrix calculation, and other operations are implemented based on MNN, which is conducive to reducing the package size of the on-device AI inference engine and further achieving lightweightness.
(4) Low barrier to entry: By encapsulating the basic capabilities in the software library layer and exposing first-type APIs to application developers through the framework layer, the basic capabilities such as rendering, physics, and animation provided by the 3D rendering engine are abstractly encapsulated, providing a few concepts such as XRScene, XRModel, XRAnchor, XREvent, and XRConfig, which are easy for XR application developers to understand and use.
(5) As the XR application runs, the stability of the XR application can be monitored, and multi-dimensional data such as crash information, startup performance, and page performance of the XR application can be obtained in real time. Post-maintenance operations are performed on the XR application based on this monitoring data. These maintenance operations include but are not limited to: patch repair, information configuration, etc.

In an embodiment of the present application, an editing toolchain suitable for a 3D scene embedded in a host 2D application is built based on the runtime container, that is, the content generator 20. Its structure and function description can be referred to in the embodiment shown in FIG. 6D above, and will not be repeated here. The content generator 20, based on the runtime container, can meet constraints such as package size, performance, and effects for embedding into a 2D application, and has the following effects:
(1) Efficiency improvement, greatly reducing the communication and collaboration costs between artists and technicians. By integrating the runtime container in the content generator and using the 3D rendering engine in the software library layer of the runtime container, what-you-see-is-what-you-get editing of 3D scene effects can be achieved, which is convenient for application developers to edit the effects and application logic code of the 3D scene.
(2) Consistent effects. The 3D content generator and the target device reuse the same runtime container, which can ensure consistency between the content editing and the running effect on the target device.
(3) Standardized constraints. The 3D content generator has a built-in custom 3D model standard specification, involving geometry, materials, lighting, cameras, animation, etc. The final 3D scene export will be verified according to the 3D model standard, ensuring the standardization of the resulting 3D models, and meeting the constraints of effects, performance, etc., for the XR application running on the target device.

In addition to providing an XR application development system, embodiments of the present application also provide an XR application development method, an XR application editing method, and an XR application running method. The following embodiments will describe the XR application development method, the XR application editing method, and the XR application running method respectively.

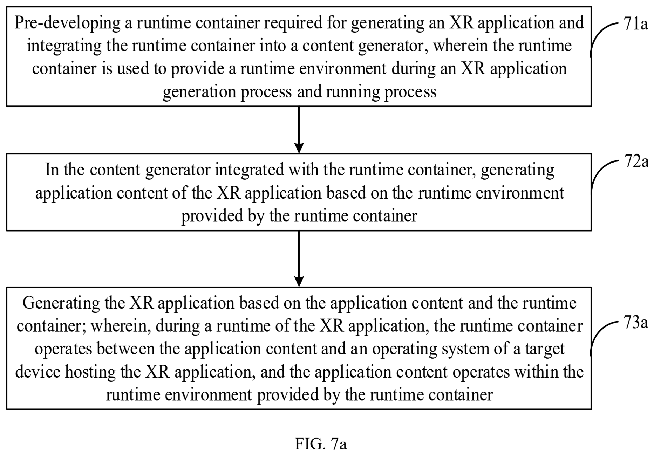

FIG. 7A is a schematic flowchart of an XR application development method provided by an embodiment of the present application. The method is applied to the aforementioned XR application development system. As shown in FIG. 7A, the method includes:
71a. Pre-developing a runtime container required for generating an XR application and integrating the runtime container into a content generator, where the runtime container is configured to provide a runtime environment during the generation process and running process of the XR application.
72a. In the content generator with the integrated runtime container, generating application content of the XR application based on the runtime environment provided by the runtime container.
73a. Generating the XR application according to the application content and the runtime container; wherein, during the running process of the XR application, the runtime container runs between the application content and an operating system of a target device where the XR application is located, and the application content runs in the runtime environment provided by the runtime container.

In some embodiments, generating the application content of the XR application based on the runtime environment provided by the runtime container, in the content generator in which the runtime container is integrated, includes: in response to an XR application generation operation, loading 3D scene static resources; based on the runtime environment provided by the runtime container, adding 3D scene dynamic information to the 3D scene static resources to obtain 3D scene resource data; and based on the runtime environment provided by the runtime container, editing application logic code for the 3D scene resource data to obtain the application content of the XR application. For detailed implementations of each step, reference may be made to the relevant descriptions in the foregoing system embodiments or the following method embodiments, which will not be repeated here.

In some embodiments, generating the XR application according to the application content and the runtime container includes: integrating the runtime container and the application content into an installation package of the XR application and publishing the installation package of the XR application; and/or, integrating the runtime container into an installation package of a host 2D application and publishing the installation package of the host 2D application, and publishing the application content to a resource server corresponding to the host 2D application, where the host 2D application is a 2D application that needs to embed the XR application.

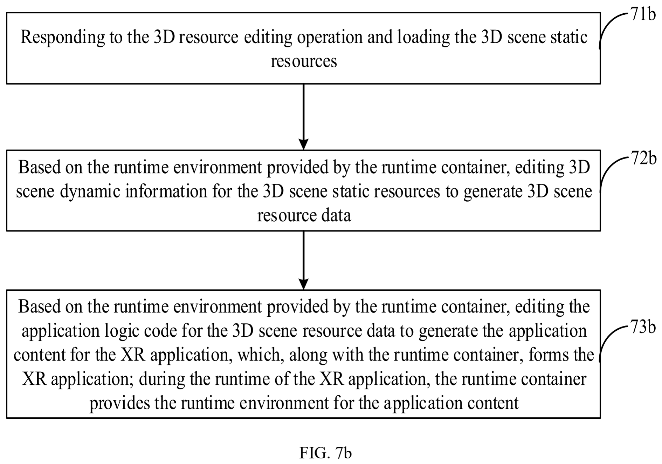

FIG. 7B is a schematic flowchart of an XR application editing method provided by an embodiment of the present application. The method is applied to the content generator in the XR application development system described above. The content generator has an integrated runtime container, which is configured to provide a runtime environment during the generation process or running process of an XR application. As shown in FIG. 7B, the method includes:
71b. In response to a 3D resource editing operation, loading 3D scene static resources.
72b. Based on a runtime environment provided by a runtime container, adding 3D scene dynamic information to the 3D scene static resources to obtain 3D scene resource data.
73b. Based on the runtime environment provided by the runtime container, editing application logic code for the 3D scene resource data to obtain application content of an XR application; the application content and the runtime container form the XR application, and the runtime container in the XR application provides the runtime environment for the application content during the running process of the XR application.

In some embodiments, adding the 3D scene dynamic information to the 3D scene static resources based on the runtime environment provided by the runtime container to obtain the 3D scene resource data includes:
in response to a loading operation of the 3D scene static resources, starting the runtime container, and running the 3D scene static resources in the runtime environment provided by the runtime container to obtain a 3D static image;
in response to an editing operation on the 3D static image, editing the 3D scene dynamic information for the 3D scene static resources to obtain first intermediate-state resource data;
in response to a scene effect viewing operation, re-invoking the runtime container, and running the first intermediate-state resource data in the runtime environment provided by the runtime container to obtain a first intermediate-state 3D image;
if the first intermediate-state 3D image does not satisfy the scene effect, adjusting the 3D scene dynamic information until the scene effect is satisfied, to obtain the 3D scene resource data.

In some embodiments, editing the application logic code for the 3D scene resource data based on the runtime environment provided by the runtime container to obtain the application content of the XR application includes:
in response to a loading operation of the 3D scene resource data, starting the runtime container, and running the 3D scene resource data in the runtime environment provided by the runtime container to obtain a first intermediate-state 3D image;
in response to an editing operation of the application logic code, generating second intermediate-state resource data according to the 3D scene resource data and the application logic code, and re-invoking the runtime container to run the second intermediate resource data in the runtime environment provided by the runtime container, to obtain a second intermediate-state 3D image;
if the second intermediate-state 3D image does not satisfy an interactive effect, adjusting the application logic code until the interactive effect is satisfied, to obtain the application content of the XR application.

In an optional embodiment, the runtime container includes: a framework layer, a runtime environment layer, and a software library layer. For the architecture and working principle of the runtime container, reference may be made to the foregoing embodiments, which will not be repeated here.

Based on the above, running the 3D scene static resources in the runtime environment provided by the runtime container to obtain the 3D static image includes: the framework layer sensing a first loading event of the 3D scene static resources and running a function entity of at least one first-type API corresponding to the first loading event; when a first target API encapsulated in the function entity is encountered during execution, providing the first target API to the runtime environment layer, where the first target API belongs to second-type APIs; the runtime environment layer, according to the first target API, calling a corresponding software engine in the software library layer to respond to the first loading event.

Correspondingly, running the first intermediate-state resource data in the runtime environment provided by the runtime container to obtain the first intermediate-state 3D image includes: the framework layer sensing a first editing event on the 3D static image and running a function entity of at least one first-type API corresponding to the first editing event; when a first target API encapsulated in the function entity is encountered during execution, providing the first target API to the runtime environment layer, where the first target API belongs to second-type APIs; the runtime environment layer, according to the first target API, calling a corresponding software engine in the software library layer to respond to the first editing event.

Correspondingly, running the 3D scene resource data in the runtime environment provided by the runtime container to obtain the first intermediate-state 3D image includes:
the framework layer sensing a second loading event of the 3D scene resource data and running a function entity of at least one first-type API corresponding to the second loading event; when a second target API encapsulated in the function entity is encountered during execution, providing the second target API to the runtime environment layer, where the second target API belongs to second-type APIs; the runtime environment layer, according to the second target API, calling a corresponding software engine in the software library layer to respond to the second loading event.

Correspondingly, running the second intermediate-state resource data in the runtime environment provided by the runtime container to obtain the second intermediate-state 3D image includes: the framework layer sensing a second editing event of the application logic code and running a function entity of at least one first-type API corresponding to the second editing event; when a second target API encapsulated in the function entity is encountered during execution, providing the second target API to the runtime environment layer, where the second target API belongs to second-type APIs; the runtime environment layer, according to the second target API, calling a corresponding software engine in the software library layer to respond to the second editing event.

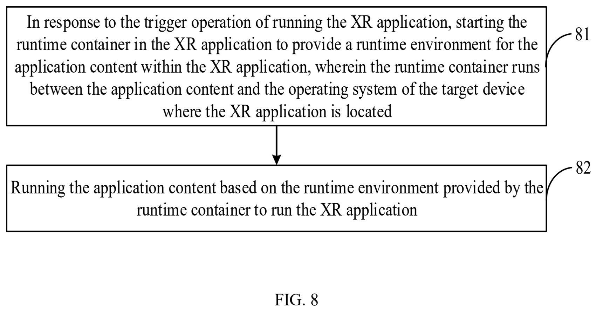

FIG. 8 is a schematic flowchart of an XR application running method provided by an embodiment of the present application. The method is applied to the runtime container in the aforementioned XR application development system. As shown in FIG. 8, the method includes:
81. In response to a trigger operation for running an XR application, starting a runtime container in the XR application to provide a runtime environment for application content in the XR application, where the runtime container runs between the application content and an operating system of a target device where the XR application is located.
82. Running the application content based on the runtime environment provided by the runtime container to run the XR application.

In some embodiments, before responding to the trigger operation for running the XR application, the method also includes: installing the runtime container and the application content of the XR application on the target device according to an installation package of the XR application, where the installation package of the XR application includes the runtime container and the application content. Correspondingly, responding to the trigger operation for running the XR application may be responding to a trigger operation such as a double-click or a long-press on an icon of the XR application to trigger running of the XR application.

And/or,
in some embodiments, before responding to the trigger operation for running the XR application, the method also includes: installing the runtime container on the target device according to an installation package of a host 2D application, where the host 2D application is a 2D application that needs to embed the XR application, the installation package of the host 2D application includes the runtime container, and the application content is published to a resource server corresponding to the host 2D application for dynamic loading. During the running process of the host 2D application, access entry information of the XR application can be displayed. Correspondingly, responding to the trigger operation for running the XR application may be responding to a trigger operation on the access entry information, such as a click or a long-press. In addition, in this scenario, before running the application content based on the runtime environment provided by the runtime container, the method also includes an operation of downloading the application content from the resource server.

In an optional embodiment, the runtime container includes: a framework layer, a runtime environment layer, and a software library layer. For the architecture and working principle of the runtime container, reference may be made to the foregoing embodiments, which will not be repeated here.

Correspondingly, running the application content based on the runtime environment provided by the runtime container to run the XR application includes:
the framework layer sensing a target event during the running process of the XR application, running a function entity of at least one first-type API corresponding to the target event, and providing a target API encapsulated in the function entity to the runtime environment layer, where the target API belongs to second-type APIs;
the runtime environment layer, according to the target API provided by the framework layer, calling a corresponding software engine in the software library layer to respond to the target event, to run the XR application;
wherein, the first-type API is obtained by encapsulating the second-type API, and the second-type API is an API corresponding to a software engine included in the software library layer.

The runtime environment layer calling the corresponding software engine in the software library layer to respond to the target event according to the target API provided by the framework layer includes at least one of the following operations:
when the target API includes a second-type API corresponding to a download engine in the software library layer, calling the download engine to download the application content of the XR application from a server;
when the target API includes a second-type API corresponding to a storage engine in the software library layer, calling the storage engine to perform storage management on the application content of the XR application;
when the target API includes a second-type API corresponding to a lifecycle management engine in the software library layer, calling the lifecycle management engine to perform lifecycle management on the XR application;
when the target API includes a second-type API corresponding to a 3D rendering engine in the software library layer, calling the 3D rendering engine to perform 3D rendering on the XR application;
when the target API includes a second-type API corresponding to an AI inference engine in the software library layer, calling the AI inference engine to perform AI inference processing on the XR application;
when the target API includes a second-type API corresponding to a 2D UI engine in the software library layer, calling the 2D UI engine to process UI interaction between the XR application and a host 2D application;
when the target API includes a second-type API corresponding to an event engine in the software library layer, calling the event engine to process event callback logic in the XR application.

In some embodiments, the runtime environment layer includes at least one runtime virtual machine (VM), where different runtime VMs are implemented using different dynamic programming languages, and are configured to provide a runtime environment for XR applications implemented using different dynamic programming languages. Correspondingly, when there is a plurality of runtime VMs, the method further includes: the runtime environment layer, according to a dynamic programming language used by an XR application, scheduling a target VM among the plurality of runtime VMs that is implemented with the same dynamic programming language as used by the XR application, so that the target VM serves the XR application.

In addition to the above embodiments, an embodiment of the present application also provides an XR content running method. The XR content running method is applied in a host application embedded with an XR runtime container. The XR runtime container is located within an installation package of the host application and can be installed along with the installation of the host application. The implementation structure and function of the XR runtime container can be referred to in the runtime container in the foregoing embodiments. In this embodiment, the host application is embedded with the XR runtime container, which is configured to provide a runtime environment for the running of XR content. By running the XR content in the runtime environment provided by the XR runtime container, the purpose of presenting the XR content in the host application is ultimately achieved. Based on this, the XR content running method includes: running the host application; during the running process of the host application, displaying access entry information for the XR content, for example, the access entry information may be a link on an application page provided by the host application or an icon, control, etc., with link functionality, which is not limited herein; in response to a trigger operation on the access entry information, starting the XR runtime container and obtaining the XR content; and running the XR content based on the runtime environment provided by the XR runtime container. For the detailed implementation of running the XR content based on the runtime environment provided by the XR runtime container, it is the same as or similar to the detailed implementation of "running the application content of the XR application based on the runtime environment provided by the runtime container" in the foregoing embodiments, and will not be repeated here.

In this embodiment of the present application, the method for obtaining the XR content is not limited. In some embodiments, the XR content is deployed on a resource server corresponding to the host application, and thus the method for obtaining the XR content includes: downloading the XR content from the resource server corresponding to the host application. In another optional embodiment, the XR content can also be embedded in the host application, for example, the XR content is located within the installation package of the host application and can be installed along with the installation of the host application, and thus the method for obtaining the XR content includes: loading the XR content from a local cache.

In this embodiment of the present application, the XR content can be implemented as the application content of the XR application in the foregoing embodiments; correspondingly, the XR content combined with the XR runtime container can be implemented as the XR application in the foregoing embodiments.

The detailed implementation methods and beneficial effects of each step in the above method embodiments of the present application have been described in detail in the foregoing embodiments, and will not be described in detail here.

It should be noted that the steps of the methods provided in the embodiments described above can be performed by the same device, or the method can also be executed by different devices. For example, steps 71a to 73a can be performed by device A; or for another example, steps 71a and 72a can be performed by device A, and step 73a can be performed by device B; and so on.

In addition, in some of the processes described in the above embodiments and drawings, a plurality of operations appearing in a specific order are included, but it should be clearly understood that these operations may not be executed in the order in which they appear herein or may be executed in parallel. The sequence numbers of the operations, such as 71, 72, etc., are merely used to distinguish between different operations, and the sequence numbers themselves do not represent any execution order. In addition, these processes may include more or fewer operations, and these operations may be executed sequentially or in parallel. It should be noted that descriptions such as "first" and "second" herein are used to distinguish different messages, devices, modules, etc., and do not represent a sequence, nor do they limit "first" and "second" to be of different types.

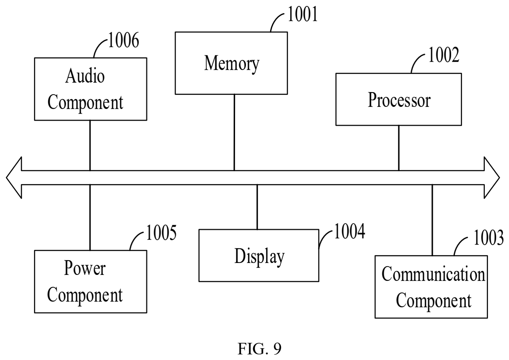

FIG. 9 is a schematic structural diagram of an electronic device provided by an embodiment of the present application. As shown in FIG. 9, the electronic device includes: a memory 1001 and a processor 1002.

The memory 1001 is configured to store computer programs and can be configured to store various other data to support operations on the electronic device. Examples of such data include instructions for any application or method operating on the electronic device, messages, pictures, videos, etc.

The processor 1002 is coupled to the memory 1001 and is configured to execute the computer programs in the memory 1001 to implement the steps in the XR application development method, the XR application editing method, or the steps in the XR application running method or the XR content running method provided by the embodiments of the present application.

For a detailed description of the XR application development method, the XR application editing method, or the XR application running method or the XR content running method, reference may be made to the foregoing embodiments, which will not be repeated here.

Further, as shown in FIG. 9, the electronic device also includes: a communication component 1003, a display 1004, a power component 1005, an audio component 1006, and other components. FIG. 9 only schematically shows some components and does not imply that the electronic device only includes the components shown in FIG. 9. When executing the XR application editing method or the XR application running method, the electronic device of this embodiment can be implemented as a terminal device such as a desktop computer, a laptop computer, a smartphone, or an IOT device, or it can also be implemented as an AR device or a VR device. When the electronic device is implemented as an AR device or a VR device, the electronic device may also include components such as a handheld controller, which are not shown in FIG. 9. When executing the XR application development method, the electronic device of this embodiment can be implemented as a terminal device such as a desktop computer, a laptop computer, or a smartphone on which a content generator and a runtime container are running simultaneously, or it can be implemented as a traditional server, a cloud server, or a system with mutual coordination between the cloud and a terminal, which is not limited herein.

Correspondingly, an embodiment of the present application also provides a computer-readable storage medium storing computer programs, where when the computer programs are executed by a processor, the processor is caused to implement the steps in the above XR application development methods or XR application editing methods, or the steps in the XR application running methods or the XR content running methods.

The aforementioned memory can be implemented by any type of volatile or non-volatile storage device or a combination thereof, such as Static Random-Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, or an optical disc.

The aforementioned communication component is configured to facilitate wired or wireless communication between the device where the communication component is located and other devices. The device where the communication component is located can access a wireless network based on communication standards, such as WiFi, 2G, 3G, 4G/LTE, 5G, or other mobile communication networks, or a combination thereof. In an exemplary embodiment, the communication component receives a broadcast signal or broadcast-related information from an external broadcast management system via a broadcast channel. In an exemplary embodiment, the communication component also includes a Near Field Communication (NFC) module to facilitate short-range communication. For example, the NFC module can be implemented based on Radio Frequency Identification (RFID) technology, Infrared Data Association (IrDA) technology, Ultra-Wideband (UWB) technology, Bluetooth (BT) technology, and other technologies.

The aforementioned display includes a screen, which may include a Liquid Crystal Display (LCD) and a Touch Panel (TP). If the screen includes a touch panel, the screen can be implemented as a touchscreen to receive input signals from a user. The touch panel includes one or more touch sensors to sense touches, swipes, and gestures on the touch panel. The touch sensors can not only sense the boundary of a touch or swipe action, but also detect the duration and pressure associated with the touch or swipe operation.

The aforementioned power component provides power to various components of the device where the power component is located. The power component may include a power management system, one or more power sources, and other components associated with generating, managing, and distributing power for the device where the power component is located.

The aforementioned audio component can be configured to output and/or input audio signals. For example, the audio component includes a microphone (MIC), which is configured to receive an external audio signal when the device where the audio component is located is in an operating mode, such as a call mode, a recording mode, or a voice recognition mode. The received audio signal can be further stored in the memory or sent via the communication component. In some embodiments, the audio component also includes a speaker for outputting audio signals.

A person of ordinary skill in the art should understand that the embodiments of the present application may be provided as a method, a system, or a computer program product. Therefore, the present application may take the form of a completely hardware embodiment, a completely software embodiment, or an embodiment combining software and hardware aspects. Furthermore, the present application may take the form of a computer program product implemented on one or more computer-readable storage media (including but not limited to disk storage, Compact Disc Read-Only Memory (CD-ROM), optical storage, etc.) containing computer-usable program code.

The present application is described with reference to flowcharts and/or block diagrams of methods, apparatuses (systems), and computer program products according to embodiments of the present application. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general-purpose computer, a special-purpose computer, an embedded processor, or other programmable data processing apparatus to produce a machine, such that the instructions, which are executed via the processor of the computer or other programmable data processing apparatus, create an apparatus for implementing the functions specified in one or more flows of the flowchart and/or one or more blocks of the block diagram.

These computer program instructions may also be stored in a computer-readable memory that can direct a computer or other programmable data processing apparatus to function in a particular manner, such that the instructions stored in the computer-readable memory produce an article of manufacture including an instruction apparatus which implements the functions specified in one or more flows of the flowchart and/or one or more blocks of the block diagram.

These computer program instructions may also be loaded onto a computer or other programmable data processing apparatus to cause a series of operational steps to be performed on the computer or other programmable apparatus to produce a computer-implemented process, such that the instructions which execute on the computer or other programmable apparatus provide steps for implementing the functions specified in one or more flows of the flowchart and/or one or more blocks of the block diagram.

In a typical configuration, a computing device includes one or more processors (Central Processing Units, CPUs), input/output interfaces, network interfaces, and memory.

The memory may include forms of non-persistent storage, Random Access Memory (RAM), and/or non-volatile memory in computer-readable media, such as Read-Only Memory (ROM) or flash RAM. The memory is an example of a computer-readable medium.

Computer-readable media include permanent and non-permanent, removable and non-removable media, which can be used to store information by any method or technology. The information can be computer-readable instructions, data structures, program modules, or other data. Examples of computer storage media include, but are not limited to, Phase-change Random Access Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or other memory technology, Compact Disc Read-Only Memory (CD-ROM), Digital Video Disc (DVD) or other optical storage, magnetic cassettes, magnetic tape, magnetic disk storage or other magnetic storage devices, or any other non-transitory medium which can be used to store information that can be accessed by a computing device. As defined herein, computer-readable media do not include transitory computer-readable media, such as modulated data signals and carriers.

It also needs to be noted that the terms "comprising," "including," or any other variant thereof are intended to cover a non-exclusive inclusion, such that a process, method, article, or apparatus that comprises a list of elements does not include only those elements but may include other elements not expressly listed or inherent to such process, method, article, or apparatus. Without more constraints, an element preceded by the phrase "comprises a..." does not preclude the existence of additional identical elements in the process, method, article, or apparatus that comprises the element.

The above are only embodiments of the present application and are not intended to limit the present application. For a person skilled in the art, the present application may have various modifications and changes. Any modification, equivalent replacement, improvement, etc., made within the spirit and principle of the present application shall be included within the scope of the claims of the present application.

## Claims

1. A content generator, comprising:
a runtime container integrated within the content generator and configured to generate an extended reality (XR) application, wherein the runtime container is configured to provide a runtime environment during a generation process or a running process of the XR application; the content generator further comprising:
a 3D scene effect editing module, configured to, in response to an XR application generation operation, load 3D scene static resources, and based on the runtime environment provided by the runtime container, edit 3D scene dynamic information for the 3D scene static resources to obtain 3D scene resource data; and
a 3D application logic editing module, configured to, based on the runtime environment provided by the runtime container, edit application logic code for the 3D scene resource data to obtain application content of the XR application;
wherein the application content and the runtime container form the XR application, and the runtime container in the XR application provides the runtime environment for the application content during the running process of the XR application.

2. The content generator according to claim 1, wherein: the runtime container comprises: a framework layer, a runtime environment layer, and a software library layer;
the software library layer comprises a plurality of software engines and provides second-type application programming interfaces (APIs) for the plurality of software engines, wherein a second-type API enables encapsulation of a first-type API;
the framework layer is configured to provide a first-type API to an application developer, thereby enabling the application developer to write the application logic code of the XR application based on the first-type API, and during the generation process or the running process of the XR application, sense a target event, run a function entity of at least one first-type API corresponding to the target event, and provide a target API encapsulated in the function entity to the runtime environment layer, wherein the target API is a second-type API; and
the runtime environment layer is configured to, according to the target API, call a corresponding software engine in the software library layer to respond to the target event.

3. The content generator according to claim 2, wherein the software library layer is further configured to: provide a second-type API to the runtime environment layer, and encapsulate a first-type API based on the second-type API, and provide the first-type API to the framework layer, for the framework layer to provide the first-type API to the application developer;
or
the software library layer is further configured to: provide a second-type API to the runtime environment layer; and the runtime environment layer is further configured to: encapsulate a first-type API based on the second-type API, and provide the first-type API to the framework layer, for the framework layer to provide the first-type API to the application developer.

4. The content generator according to claim 2 or 3, wherein the 3D scene effect editing module is specifically configured to:
in response to a loading operation of the 3D scene static resources, start the runtime container, and run the 3D scene static resources in the runtime environment provided by the runtime container to obtain a 3D static image;
in response to an editing operation on the 3D static image, edit the 3D scene dynamic information for the 3D scene static resources to obtain first intermediate-state resource data;
in response to a scene effect viewing operation, re-invoke the runtime container, and run the first intermediate-state resource data in the runtime environment provided by the runtime container to obtain a first intermediate-state 3D image; and
when the first intermediate-state 3D image does not satisfy a scene effect, adjust the 3D scene dynamic information until the scene effect is satisfied to obtain the 3D scene resource data.

5. The content generator according to claim 2 or 3, wherein the 3D application logic editing module is specifically configured to:
in response to a loading operation of the 3D scene resource data, start the runtime container, and run the 3D scene resource data in a runtime environment provided by the runtime container to obtain a first intermediate-state 3D image;
in response to an editing operation of the application logic code, generate second intermediate-state resource data according to the 3D scene resource data and the application logic code, and re-invoke the runtime container to run the second intermediate-state resource data in the runtime environment provided by the runtime container to obtain a second intermediate-state 3D image; and
when the second intermediate-state 3D image does not satisfy an interactive effect, adjust the application logic code until the interactive effect is satisfied, to obtain the application content of the XR application.

6. An XR application editing method, applied to a content generator, wherein a runtime container is integrated in the content generator, the runtime container is configured to provide a runtime environment during a generation process and a running process of an XR application, the method comprising:
in response to an XR application generation operation, loading 3D scene static resources;
based on the runtime environment provided by the runtime container, adding 3D scene dynamic information to the 3D scene static resources to obtain 3D scene resource data; and
based on the runtime environment provided by the runtime container, editing application logic code for the 3D scene resource data to obtain application content of the XR application;
wherein the application content and the runtime container form the XR application, and the runtime container in the XR application provides the runtime environment for the application content during a running process of the XR application.

7. The method according to claim 6, wherein the adding of the 3D scene dynamic information to the 3D scene static resources comprises:
in response to a loading operation of the 3D scene static resources, starting the runtime container, and running the 3D scene static resources in the runtime environment provided by the runtime container to obtain a 3D static image;
in response to an editing operation on the 3D static image, editing the 3D scene dynamic information for the 3D scene static resources to obtain first intermediate-state resource data;
in response to a scene effect viewing operation, re-invoking the runtime container, and running the first intermediate-state resource data in the runtime environment provided by the runtime container to obtain a first intermediate-state 3D image; and
when the first intermediate-state 3D image does not satisfy a scene effect, adjusting the 3D scene dynamic information until the scene effect is satisfied, to obtain the 3D scene resource data.

8. The method according to claim 7, wherein the runtime container comprises a framework layer, a runtime environment layer, and a software library layer, and
wherein the running of the 3D scene static resources or the first intermediate-state resource data in the runtime environment provided by the runtime container to obtain the 3D static image or the first intermediate-state 3D image comprises:
the framework layer sensing a first loading event of the 3D scene static resources or a first editing event on the 3D static image, and running a function entity of at least one first-type API corresponding to the first loading event or the first editing event;
when running to a first target API encapsulated in the function entity, providing the first target API to the runtime environment layer, wherein the first target API is a second-type API; and
the runtime environment layer, according to the first target API, calling a corresponding software engine in the software library layer to respond to the first loading event or the first editing event;
wherein the first-type API is formed by encapsulating the second-type API, and the second-type API is an API corresponding to a software engine included in the software library layer.

9. The method according to any one of claims 6 and 7, wherein the editing of the application logic code for the 3D scene resource data comprises:
in response to a loading operation of the 3D scene resource data, starting the runtime container, and running the 3D scene resource data in the runtime environment provided by the runtime container to obtain a first intermediate-state 3D image;
in response to an editing operation of the application logic code, generating second intermediate-state resource data according to the 3D scene resource data and the application logic code, and re-invoking the runtime container to run the second intermediate-state resource data in the runtime environment provided by the runtime container to obtain a second intermediate-state 3D image; and
when the second intermediate-state 3D image does not satisfy an interactive effect, adjusting the application logic code until the interactive effect is satisfied, to obtain the application content of the XR application.

10. The method according to claim 9, wherein the runtime container comprises a framework layer, a runtime environment layer, and a software library layer, and
wherein the running of the 3D scene resource data or the second intermediate-state resource data in the runtime environment provided by the runtime container to obtain the first intermediate-state 3D image or the second intermediate-state 3D image comprises:
the framework layer sensing a second loading event of the 3D scene resource data or a second editing event of the application logic code, and running a function entity of at least one first-type API corresponding to the second loading event or the second editing event; when running to a second target API encapsulated in the function entity, providing the second target API to the runtime environment layer, wherein the second target API is a second-type API; and
the runtime environment layer, according to the second target API, calling a corresponding software engine in the software library layer to respond to the second loading event or the second editing event;
wherein the first-type API is formed by encapsulating the second-type API, and the second-type API is an API corresponding to a software engine included in the software library layer.

11. An electronic device, comprising a memory and a processor, the memory being configured to store a computer program; the processor being coupled to the memory and configured to execute the computer program to implement the steps in the method according to any one of claims 6-10.

12. A computer-readable storage medium storing a computer program, wherein when the computer program is executed by a processor, the processor is caused to perform the method according to any one of claims 6-10.
